# EUROPEAN PATENT APPLICATION

(11) **EP 4 366 256 A1**
(43) Date of publication of application: **08.05.2024**
(21) Application number: 22844892.4
(22) Date of filing: 14.04.2022
(51) Int. Cl.: H04L 27/26

(54) **COMMUNICATION METHOD AND APPARATUS**

(30) Priority: 19.07.2021 CN 202110815897
(71) Applicant: Huawei Technologies Co., Ltd., Longgang Shenzhen, Guangdong 518129 (CN)
(72) Inventor: YU, Jian, Shenzhen, Guangdong 518129 (CN); EPSTEIN, Avner, Shenzhen, Guangdong 518129 (CN); TSODIK, Genadiy, Shenzhen, Guangdong 518129 (CN); SHILO, Shimon, Shenzhen, Guangdong 518129 (CN); KLEIN, Arik, Shenzhen, Guangdong 518129 (CN); REDLICH, Oded, Shenzhen, Guangdong 518129 (CN); HU, Mengshi, Shenzhen, Guangdong 518129 (CN)
(74) Representative: Maiwald GmbH
(86) International application number: PCT/CN2022/086811
(87) International publication number: WO 2023/000720

(57) **Abstract**

This application provides a communication method and apparatus, and relates to the communication field. The method includes: generating a physical layer protocol data unit PPDU, where the PPDU includes a first field indicating that the PPDU is an extremely high throughput sounding null data packet EHT sounding NDP transmitted based on orthogonal frequency division multiple access OFDMA, the PPDU further includes an extremely high throughput-long training field EHT-LTF and a packet extension PE field, and the PE field is adjacent to the EHT-LTF; and sending the PPDU. In this way, a Bfee may determine, based on the first field in the PPDU, that the PPDU is the EHT sounding NDP transmitted based on OFDMA, perform channel estimation by using the PPDU, and feed back channel state information to a Bfer, to implement functions such as beamforming and resource scheduling for OFDMA transmission, thereby improving channel quality and a throughput. This application is applied to a wireless local area network system supporting IEEE 802.11ax next-generation Wi-Fi protocols, for example, the 802.11 series protocols such as the 802.11be or the EHT.

## Description

This application claims priority to Chinese Patent Application No. 202110815897.3, filed with the China National Intellectual Property Administration on July 19, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a wireless system such as a wireless local area network (wireless local area network, WLAN), an access point (access point, AP) and a station (station, STA) usually need to obtain channel state information, and perform beamforming (beamforming, BF), resource scheduling, and the like by using the channel state information, to improve channel quality and a throughput.

However, in the 802.11be standard, an AP and a STA cannot perform channel sounding when performing transmission based on orthogonal frequency division multiple access (orthogonal frequency division multiple access, OFDMA). As a result, the AP or the STA cannot obtain channel state information to implement functions such as beamforming (beamforming, BF) and resource scheduling. Consequently, channel quality is poor, and a throughput is low. Therefore, how to enable an AP and a STA to perform channel sounding during OFDMA based transmission becomes an urgent problem to be resolved currently.

### SUMMARY

This application provides a communication method and apparatus, to resolve a problem that an AP and a STA cannot perform channel sounding during OFDMA based transmission.

To achieve the foregoing objective, this application uses the following technical solutions.

According to a first aspect, this application provides a communication method. The method may be applied to a beamformer (beamformer, Bfer), and the Bfer may be an AP or a STA. The communication method includes: generating a physical layer protocol data unit PPDU, where the PPDU includes a first field indicating that the PPDU is an extremely high throughput sounding null data packet EHT sounding NDP transmitted based on orthogonal frequency division multiple access OFDMA, the PPDU further includes an extremely high throughput-long training field EHT-LTF and a packet extension PE field, and the PE field is adjacent to the EHT-LTF; and sending the PPDU.

It may be understood that the PPDU is an OFDMA based NDP used in a standard after 802.11ax, and does not include a data field. The PPDU is used by a Bfee to perform channel estimation.

Based on the communication method provided in the first aspect, the beamformee (beamformee, Bfee) may determine, based on the first field in the PPDU, that the PPDU is the OFDMA based NDP, perform channel estimation by using the PPDU during OFDMA based transmission, and feed back channel state information to the beamformer (beamformer, Bfer), to implement functions such as beamforming and resource scheduling for OFDMA transmission, thereby improving channel quality and a throughput.

In some possible designs, the first field may include a PPDU type and compression mode subfield.

In some possible designs, the first field may include a PPDU type and compression mode subfield and a second field. The PPDU type and compression mode subfield indicates that the PPDU is the EHT sounding NDP, and the second field indicates that the PPDU is transmitted based on OFDMA.

In some possible designs, the first field may include a station identifier STA-ID subfield, and the STA-ID subfield indicates that the PPDU is the EHT sounding NDP transmitted based on OFDMA.

In some possible designs, the PPDU may further include an extremely high throughput signal EHT-SIG field, the EHT-SIG includes n user fields, the n user fields include at least one of a number of spatial streams subfield or a beamformed subfield, and n is a positive integer. In this way, user fields of a same structure may be used for the PPDU provided in this embodiment of this application and a PPDU for performing data transmission based on OFDMA, and procedures in which a receiver parses EHT-SIGs in the PPDU provided in this embodiment of this application and the PPDU for performing data transmission based on OFDMA may be the same, so that implementation complexity of the receiver can be reduced.

In some possible designs, the PPDU may further include an EHT-SIG, the EHT-SIG includes only a common field, and the common field may include at least one of a number of spatial streams subfield or a beamformed subfield. In this way, the common field may be used to carry the number of spatial streams subfield or the beamformed subfield, thereby reducing overheads of the EHT-SIG.

In some possible designs, the PPDU may further include a common signal U-SIG field and the EHT-SIG, the U-SIG may include a first punctured channel indication field, and the EHT-SIG may include a second punctured channel indication field. The first punctured channel indication field indicates a puncturing status in an 80 MHz subblock bandwidth of the U-SIG, and the second punctured channel indication field indicates a puncturing status in an entire bandwidth of the PPDU. With reference to related descriptions in Manner 7 to Manner 9 in this specification, it can be learned that puncturing patterns of the PPDU are indicated by using the first punctured channel indication field and the second punctured channel indication field, so that more puncturing patterns can be indicated, and the PPDU provided in this application supports more flexible puncturing patterns.

Optionally, the second punctured channel indication field may include at least one resource unit indication subfield, and the resource unit indication subfield indicates a puncturing status of a subchannel in the bandwidth of the PPDU.

Optionally, the second punctured channel indication field may include a bitmap subfield, and the bitmap subfield indicates the puncturing status in the entire bandwidth of the PPDU.

According to a second aspect, this application provides a communication method. The method may be applied to a Bfer, and the Bfer may be an AP or a STA. The communication method includes: generating an extremely high throughput null data packet announcement EHT NDPA frame, where the EHT NDPA frame includes a third field indicating a puncturing status in an entire bandwidth of an EHT sounding NDP, and the EHT sounding NDP includes a field indicating that the puncturing status in the entire bandwidth of the EHT sounding NDP is determined based on the third field; and sending the EHT NDPA frame.

It may be understood that the EHT NDPA frame is an EHT NDPA frame used in a standard after 802.11ax. The EHT NDPA frame is used by a Bfee to perform channel estimation.

Based on the communication method provided in the second aspect, during OFDMA based transmission, the Bfee may obtain the third field from the EHT NDPA frame based on an indication of a fourth field in the EHT sounding NDP, determine the puncturing status in the entire bandwidth of the EHT sounding NDP based on an indication of the third field, perform channel estimation based on the puncturing status and the EHT sounding NDP, and feed back channel state information to the Bfer, to implement functions such as beamforming and resource scheduling for OFDMA transmission, thereby improving channel quality and a throughput.

In some possible designs, the third field may include at least one piece of first information, and the first information indicates the beamformee Bfee to feed back channel state information of a subchannel in the bandwidth of the EHT sounding NDP, or the first information indicates that a subchannel in the bandwidth of the EHT sounding NDP is not punctured.

Optionally, the third field may further include at least one piece of second information, and the second information indicates that a subchannel in the bandwidth of the EHT sounding NDP is punctured.

According to a third aspect, this application provides a communication method. The method may be applied to a Bfee, and the Bfee may be an AP or a STA. The communication method includes: receiving a PPDU, where the PPDU includes a first field indicating that the PPDU is an EHT sounding NDP transmitted based on OFDMA, the PPDU further includes an EHT-LTF and PE field, and the PE field is adjacent to the EHT-LTF; and performing channel estimation by using the PPDU.

It may be understood that the PPDU is an OFDMA based NDP used in a standard after 802.11ax, and does not include a data field. The PPDU is used by the Bfee to perform channel estimation.

Based on the communication method provided in the third aspect, the beamformee (beamformee, Bfee) may determine, based on the first field in the PPDU, that the PPDU is the OFDMA based NDP, perform channel estimation by using the PPDU during OFDMA based transmission, and feed back channel state information to a beamformer (beamformer, Bfer), to implement functions such as beamforming and resource scheduling for OFDMA transmission, thereby improving channel quality and a throughput.

In some possible designs, the first field may include a PPDU type and compression mode subfield.

In some possible designs, the first field may include a PPDU type and compression mode subfield and a second field. The PPDU type and compression mode subfield indicates that the PPDU is the EHT sounding NDP, and the second field indicates that the PPDU is transmitted based on OFDMA.

In some possible designs, the first field may include a STA-ID subfield, and the STA-ID subfield indicates that the PPDU is the EHT sounding NDP transmitted based on OFDMA.

In some possible designs, the PPDU may further include an EHT-SIG, the EHT-SIG includes n user fields, the n user fields include at least one of a number of spatial streams subfield or a beamformed subfield, and n is a positive integer.

In some possible designs, the PPDU may further include an EHT-SIG, the EHT-SIG includes only a common field, and the common field may include at least one of a number of spatial streams subfield or a beamformed subfield.

In some possible designs, the PPDU may further include a U-SIG and the EHT-SIG, the U-SIG may include a first punctured channel indication field, and the EHT-SIG may include a second punctured channel indication field. The first punctured channel indication field indicates a puncturing status in an 80 MHz subblock bandwidth of the U-SIG, and the second punctured channel indication field indicates a puncturing status in an entire bandwidth of the PPDU.

Optionally, the second punctured channel indication field may include at least one resource unit indication subfield, and the resource unit indication subfield indicates a puncturing status of a subchannel in the bandwidth of the PPDU.

Optionally, the second punctured channel indication field may include a bitmap subfield, and the bitmap subfield indicates the puncturing status in the entire bandwidth of the PPDU.

According to a fourth aspect, this application provides a communication method. The method may be applied to a Bfee, and the Bfee may be an AP or a STA. The communication method includes: receiving an EHT NDPA frame, where the EHT NDPA frame includes a third field indicating a puncturing status in an entire bandwidth of an EHT sounding NDP, and the EHT sounding NDP includes a field indicating that the puncturing status in the entire bandwidth of the EHT sounding NDP is determined based on the third field; and parsing the EHT NDPA frame.

It may be understood that the EHT NDPA frame is an EHT NDPA frame used in a standard after 802.11ax. The EHT NDPA frame is used by the Bfee to perform channel estimation.

Based on the communication method provided in the fourth aspect, during OFDMA based transmission, the Bfee may obtain the third field from the EHT NDPA frame based on an indication of a fourth field in the EHT sounding NDP, determine the puncturing status in the entire bandwidth of the EHT sounding NDP based on an indication of the third field, perform channel estimation based on the puncturing status and the EHT sounding NDP, and feed back channel state information to a Bfer, to implement functions such as beamforming and resource scheduling for OFDMA transmission, thereby improving channel quality and a throughput.

In some possible designs, the third field may include at least one piece of first information, and the first information indicates the Bfee to feed back channel state information of a subchannel in the bandwidth of the EHT sounding NDP, or the first information indicates that a subchannel in the bandwidth of the EHT sounding NDP is not punctured.

Optionally, the third field further includes at least one piece of second information, and the second information indicates that a subchannel in the bandwidth of the EHT sounding NDP is punctured.

According to a fifth aspect, this application further provides a communication apparatus, including a processing unit and a sending unit. The processing unit is configured to generate a PPDU, where the PPDU includes a first field indicating that the PPDU is an extremely high throughput sounding null data packet EHT sounding NDP transmitted based on orthogonal frequency division multiple access OFDMA, the PPDU further includes an extremely high throughput-long training field EHT-LTF and a packet extension PE field, and the PE field is adjacent to the EHT-LTF. The sending unit is configured to send the PPDU. In this way, a beamformee (beamformee, Bfee) may determine, based on the first field in the PPDU, that the PPDU is an OFDMA based NDP, perform channel estimation by using the PPDU during OFDMA based transmission, and feed back channel state information to a beamformer (beamformer, Bfer), to implement functions such as beamforming and resource scheduling for OFDMA transmission, thereby improving channel quality and a throughput.

The communication apparatus may be understood as the Bfer. The communication apparatus may be, for example, an access point or a station, or the communication apparatus is deployed in the access point or the station.

In some possible designs, the first field may include a PPDU type and compression mode subfield.

In some possible designs, the first field may include a PPDU type and compression mode subfield and a second field. The PPDU type and compression mode subfield indicates that the PPDU is the EHT sounding NDP, and the second field indicates that the PPDU is transmitted based on OFDMA.

In some possible designs, the first field may include a station identifier STA-ID subfield, and the STA-ID subfield indicates that the PPDU is the EHT sounding NDP transmitted based on OFDMA.

In some possible designs, the PPDU may further include an extremely high throughput signal EHT-SIG field, the EHT-SIG includes n user fields, the n user fields include at least one of a number of spatial streams subfield or a beamformed subfield, and n is a positive integer.

In some possible designs, the PPDU may further include an EHT-SIG, the EHT-SIG includes only a common field, and the common field may include at least one of a number of spatial streams subfield or a beamformed subfield.

In some possible designs, the PPDU may further include a common signal U-SIG field and the EHT-SIG, the U-SIG may include a first punctured channel indication field, and the EHT-SIG may include a second punctured channel indication field. The first punctured channel indication field indicates a puncturing status in an 80 MHz subblock bandwidth of the U-SIG, and the second punctured channel indication field indicates a puncturing status in an entire bandwidth of the PPDU.

Optionally, the second punctured channel indication field may include at least one resource unit indication subfield, and the resource unit indication subfield indicates a puncturing status of a subchannel in the bandwidth of the PPDU.

Optionally, the second punctured channel indication field may include a bitmap subfield, and the bitmap subfield indicates the puncturing status in the entire bandwidth of the PPDU.

According to a sixth aspect, this application further provides a communication apparatus, including a processing unit and a sending unit. The processing unit is configured to generate an extremely high throughput null data packet announcement EHT NDPA frame. The EHT NDPA frame includes a third field indicating a puncturing status in an entire bandwidth of an EHT sounding NDP, and the EHT sounding NDP includes a field indicating that the puncturing status in the entire bandwidth of the EHT sounding NDP is determined based on the third field. The sending unit is configured to send the EHT NDPA frame. In this way, during OFDMA based transmission, a Bfee may obtain the third field from the EHT NDPA frame based on an indication of a fourth field in the EHT sounding NDP, determine the puncturing status in the entire bandwidth of the EHT sounding NDP based on an indication of the third field, perform channel estimation based on the puncturing status and the EHT sounding NDP, and feed back channel state information to a Bfer, to implement functions such as beamforming and resource scheduling for OFDMA transmission, thereby improving channel quality and a throughput.

The communication apparatus may be understood as the Bfer. The communication apparatus may be, for example, an access point or a station, or the communication apparatus is deployed in the access point or the station.

In some possible designs, the third field may include at least one piece of first information, and the first information indicates the beamformee Bfee to feed back channel state information of a subchannel in the bandwidth of the EHT sounding NDP, or the first information indicates that a subchannel in the bandwidth of the EHT sounding NDP is not punctured.

Optionally, the third field may further include at least one piece of second information, and the second information indicates that a subchannel in the bandwidth of the EHT sounding NDP is punctured.

According to a seventh aspect, this application further provides a communication apparatus, including a processing unit and a sending unit. The processing unit is configured to receive a PPDU, where the PPDU includes a first field indicating that the PPDU is an EHT sounding NDP transmitted based on OFDMA, the PPDU further includes an EHT-LTF and PE field, and the PE field is adjacent to the EHT-LTF. The sending unit is configured to perform channel estimation by using the PPDU. In this way, a beamformee (beamformee, Bfee) may determine, based on the first field in the PPDU, that the PPDU is an OFDMA based NDP, perform channel estimation by using the PPDU during OFDMA based transmission, and feed back channel state information to a beamformer (beamformer, Bfer), to implement functions such as beamforming and resource scheduling for OFDMA transmission, thereby improving channel quality and a throughput.

The communication apparatus may be understood as the Bfee. The communication apparatus may be, for example, an access point or a station, or the communication apparatus is deployed in the access point or the station.

In some possible designs, the first field may include a PPDU type and compression mode subfield.

In some possible designs, the first field may include a PPDU type and compression mode subfield and a second field. The PPDU type and compression mode subfield indicates that the PPDU is the EHT sounding NDP, and the second field indicates that the PPDU is transmitted based on OFDMA.

In some possible designs, the first field may include a STA-ID subfield, and the STA-ID subfield indicates that the PPDU is the EHT sounding NDP transmitted based on OFDMA.

In some possible designs, the PPDU may further include an EHT-SIG, the EHT-SIG includes n user fields, the n user fields include at least one of a number of spatial streams subfield or a beamformed subfield, and n is a positive integer.

In some possible designs, the PPDU may further include an EHT-SIG, the EHT-SIG includes only a common field, and the common field may include at least one of a number of spatial streams subfield or a beamformed subfield.

In some possible designs, the PPDU may further include a U-SIG and the EHT-SIG, the U-SIG may include a first punctured channel indication field, and the EHT-SIG may include a second punctured channel indication field. The first punctured channel indication field indicates a puncturing status in an 80 MHz subblock bandwidth of the U-SIG, and the second punctured channel indication field indicates a puncturing status in an entire bandwidth of the PPDU.

Optionally, the second punctured channel indication field may include at least one resource unit indication subfield, and the resource unit indication subfield indicates a puncturing status of a subchannel in the bandwidth of the PPDU.

Optionally, the second punctured channel indication field may include a bitmap subfield, and the bitmap subfield indicates the puncturing status in the entire bandwidth of the PPDU.

According to an eighth aspect, this application further provides a communication apparatus, including a receiving unit and a processing unit. The receiving unit is configured to receive an EHT NDPA frame, where the EHT NDPA frame includes a third field indicating a puncturing status in an entire bandwidth of an EHT sounding NDP, and the EHT sounding NDP includes a field indicating that the puncturing status in the entire bandwidth of the EHT sounding NDP is determined based on the third field. The processing unit is configured to parse the EHT NDPA frame. In this way, during OFDMA based transmission, a Bfee may obtain the third field from the EHT NDPA frame based on an indication of a fourth field in the EHT sounding NDP, determine the puncturing status in the entire bandwidth of the EHT sounding NDP based on an indication of the third field, perform channel estimation based on the puncturing status and the EHT sounding NDP, and feed back channel state information to a Bfer, to implement functions such as beamforming and resource scheduling for OFDMA transmission, thereby improving channel quality and a throughput.

In some possible designs, the third field may include at least one piece of first information, and the first information indicates the Bfee to feed back channel state information of a subchannel in the bandwidth of the EHT sounding NDP, or the first information indicates that a subchannel in the bandwidth of the EHT sounding NDP is not punctured.

Optionally, the third field further includes at least one piece of second information, and the second information indicates that a subchannel in the bandwidth of the EHT sounding NDP is punctured.

According to a ninth aspect, an embodiment of this application further provides a communication apparatus. The communication apparatus may include a processor and a transceiver. Optionally, the communication apparatus further includes a memory. When the processor executes computer programs or instructions in the memory, the method in any implementation of the first aspect to the fourth aspect is performed.

The communication apparatus may be understood as a Bfer. The communication apparatus may be a station, or may be an access point.

According to a tenth aspect, an embodiment of this application further provides a computer-readable storage medium, where the computer-readable storage medium stores computer instructions, and the computer instructions instruct a communication apparatus to perform the method in any implementation of the first aspect to the fourth aspect.

According to an eleventh aspect, an embodiment of this application further provides a computer program product, where the computer program product includes a computer program. When the computer program is run on a computer, the computer is enabled to perform the method in any implementation of the first aspect to the fourth aspect.

According to a twelfth aspect, this application further provides a processor, configured to perform the method in any implementation of the first aspect to the fourth aspect. In a process of performing the methods, processes of sending the foregoing information and receiving the foregoing information in the foregoing methods may be understood as a process of outputting the foregoing information by the processor and a process of receiving the foregoing input information by the processor. Specifically, when outputting the foregoing information, the processor outputs the information to a transceiver, so that the transceiver transmits the information.

Further, after the foregoing information is output by the processor, other processing may further need to be performed on the information before the information arrives at the transceiver. Similarly, when the processor receives the foregoing input information, the transceiver receives the foregoing information, and inputs the foregoing information into the processor. Further, after the transceiver receives the foregoing information, other processing may need to be performed on the foregoing information before the information is input into the processor.

In this way, unless otherwise specified, or if operations such as transmitting, sending, and receiving related to the processor do not contradict an actual function or internal logic of the operations in related descriptions, all the operations may be more generally understood as operations such as outputting, receiving, and inputting of the processor, instead of operations such as transmitting, sending, and receiving directly performed by a radio frequency circuit and an antenna.

In a specific implementation process, the processor may be a processor specially configured to perform the methods, or may be a processor, for example, a general-purpose processor, that executes computer instructions in a memory to perform the methods. The memory may be a non-transitory (non-transitory) memory such as a read-only memory (read-only memory, ROM). The memory and the processor may be integrated on a same chip, or may be separately disposed on different chips. A type of the memory and a manner of disposing the memory and the processor are not limited in embodiments of the present invention.

According to a thirteenth aspect, this application provides a chip system. The chip system includes a processor and an interface, configured to support a communication transmission device in implementing a function in the method according to any one of the first aspect to the fourth aspect, for example, determining or processing at least one of data and information in the foregoing method. In a possible design, the chip system further includes a memory, and the memory is configured to store necessary information and data of the foregoing communication apparatus. The chip system may include a chip, or may include a chip and another discrete component.

According to a fourteenth aspect, this application provides a functional entity. The functional entity is configured to implement the method according to any one of the first aspect to the fourth aspect.

For technical effects brought by any implementation of the third aspect to the fourteenth aspect, refer to technical effects brought by a corresponding implementation of the first aspect or the second aspect. Details are not described herein again.

In this application, based on the implementations according to the foregoing aspects, the implementations may be further combined to provide more implementations.

### BRIEF DESCRIPTION OF DRAWINGS

FIG. 1 is a schematic diagram of a network architecture of a communication system according to an embodiment of this application;
FIG. 2 is a schematic diagram of a structure of a WLAN communication device according to an embodiment of this application;
FIG. 3 is a schematic diagram of a structure of a chip according to an embodiment of this application;
FIG. 4 is a schematic diagram of an EHT channel sounding procedure;
FIG. 5 is a schematic diagram of a structure of an EHT MU PPDU used in 802. 1 1be;
FIG. 6 is a schematic diagram of a structure of an EHT sounding NDP used in 802. 1 1be;
FIG. 7 is a schematic flowchart 1 of a communication method according to an embodiment of this application;
FIG. 8 is a schematic diagram 1 of a structure of an EHT-SIG according to an embodiment of this application;
FIG. 9 is a schematic diagram 2 of a structure of an EHT-SIG according to an embodiment of this application;
FIG. 10 is a schematic diagram of channel puncturing according to an embodiment of this application;
FIG. 11 is a schematic diagram 3 of a structure of an EHT-SIG according to an embodiment of this application;
FIG. 12 is a schematic flowchart 2 of a communication method according to an embodiment of this application;
FIG. 13 is a schematic diagram 1 of a structure of an EHT NDPA frame according to an embodiment of this application;
FIG. 14 is a schematic diagram 2 of a structure of an EHT NDPA frame according to an embodiment of this application;
FIG. 15 is a schematic diagram 3 of a structure of an EHT NDPA frame according to an embodiment of this application;
FIG. 16 is a schematic flowchart 3 of a communication method according to an embodiment of this application;
FIG. 17 is a schematic modular diagram 1 of a communication apparatus according to an embodiment of this application;
FIG. 18 is a schematic modular diagram 2 of a communication apparatus according to an embodiment of this application;
FIG. 19 is a schematic modular diagram 3 of a communication apparatus according to an embodiment of this application;
FIG. 20 is a schematic modular diagram 4 of a communication apparatus according to an embodiment of this application; and
FIG. 21 is a schematic diagram of a structure of a communication apparatus according to an embodiment of this application.

### DESCRIPTION OF EMBODIMENTS

The following describes technical solutions of this application with reference to accompanying drawings.

Embodiments of this application may be applicable to a wireless local area network scenario, and may be applicable to the institute of electrical and electronics engineers (institute of electrical and electronics engineers, IEEE) 802.11 system standards such as the 802.11a/b/g standard, the 802.11n standard, the 802.11ac standard, the 802.11ax standard, or a next-generation standard thereof, for example, the 802.11be standard or a next-generation standard of the next-generation standard. Alternatively, embodiments of this application may be applicable to a wireless local area network system, for example, an internet of things (internet of things, IoT) network or a vehicle-to-everything (Vehicle to X, V2X) network. Certainly, embodiments of this application may alternatively be applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

An embodiment of this application provides a communication system, and a communication method described in this application is applicable to the communication system. The communication system may include one or more access points (access points, APs) and one or more stations (stations, STAs).

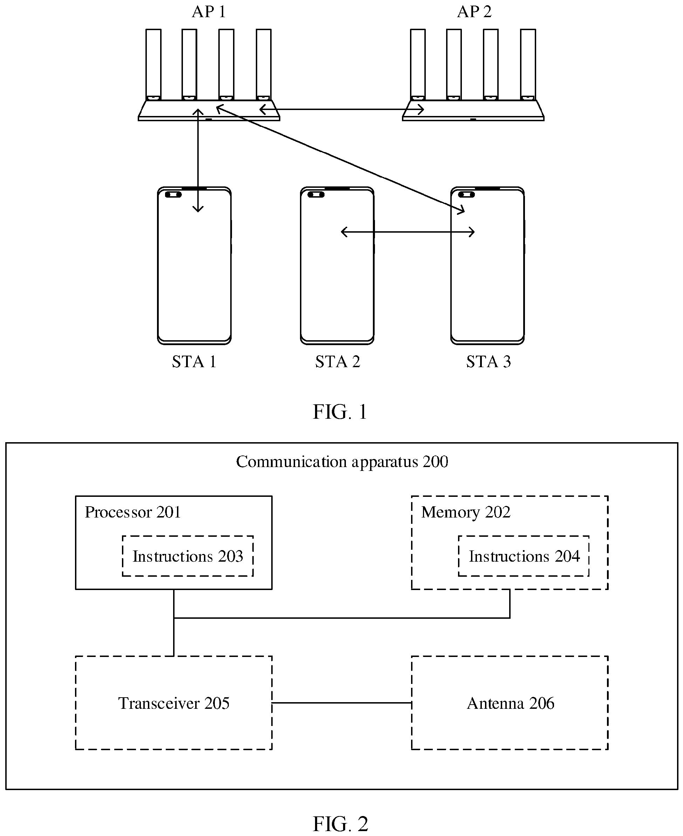

In an example, refer to FIG. 1. FIG. 1 is a schematic diagram of a network architecture of a communication system according to an embodiment of this application. In the communication system shown in FIG. 1, APs include an AP 1 and an AP 2, and STAs include a STA 1, a STA 2, and a STA 3. The AP may schedule a radio resource for the STA, and transmit data for the STA on the scheduled radio resource. For example, in the communication system shown in FIG. 1, the AP 1 may schedule radio resources for the STA 1 and the STA 3, and transmit data for the STA 1 and the STA 3 on the scheduled radio resources. The data may include uplink data information and/or downlink data information.

It may be understood that one or more APs may communicate with one or more STAs. Certainly, an AP may communicate with an AP, and a STA may communicate with a STA.

It should be noted that, in FIG. 1, an example in which the STA is a mobile phone and the AP is a router is used, and this does not mean that a type of the AP and a type of the STA in this specification are limited. In addition, quantities of APs and STAs in FIG. 1 are merely examples, and do not mean that the quantities of APs and STAs in the communication system in this specification are limited. In the network architecture of the communication system, there may be more or less APs and STAs.

In the communication system described in this application, the AP may be an apparatus that is deployed in a wireless communication network and that provides a wireless communication function for a STA associated with the AP. The AP may be deployed in a home, a building, or a campus. Certainly, the AP may alternatively be deployed in outdoors. A coverage radius of the AP may be tens of meters to hundreds of meters. The AP functions as a bridge between a wired network and a wireless network. A function of the AP is to connect wireless network clients together and then connect the wireless network to the Ethernet. Specifically, the AP may be a terminal device (for example, a mobile phone) or a network device (for example, a router) with a wireless fidelity (wireless fidelity, Wi-Fi) chip.

The AP may be a device that supports the 802.11be standard. Alternatively, the AP may be a device that supports a plurality of wireless local area network (wireless local area network, WLAN) standards of the 802.11 family such as 802.11ax, 802.11ac, 802.11n, 802.11g, 802.11b, and 802.11a. The AP in this application may be an extremely high throughput (extremely high throughput, EHT) AP or a high efficiency (high efficiency, HE) AP, or may be an access point applicable to a future-generation Wi-Fi standard. The extremely high throughput may also be referred to as extremely high throughput.

The AP may include a processor and a transceiver. The processor is configured to control and manage an action of the AP (for example, parse signaling information or process communication-related data), and the transceiver is configured to receive or send information.

In the communication system described in this application, the STA may be a wireless communication chip, a wireless sensor, a wireless communication terminal, or the like, and may also be referred to as a user (or a user station). For example, the STA may be a mobile phone, a tablet computer, a set-top box, a smart television, a smart wearable device, a vehicle-mounted communication device, or a computer that supports a Wi-Fi communication function.

Optionally, the STA may support the 802.11be standard. The STA may also support the plurality of wireless local area network (wireless local area network, WLAN) standards of the 802.11 family such as 802.11ax, 802.11ac, 802.11n, 802.11g, 802.11b, and 802.11a. The STA in this application may be an extremely high throughput (extremely high throughput, EHT) STA or a high efficiency (high efficiency, HE) STA, or may be a station applicable to the future-generation Wi-Fi standard.

The STA may include a processor and a transceiver. The processor is configured to control and manage an action of the STA (for example, parse signaling information or process communication-related data), and the transceiver is configured to receive or send information.

For example, each of the access point and the station may be used in a device in the internet of vehicles; an internet of things node in the internet of things (IoT, internet of things); a sensor; a smart camera, an intelligent remote control, and a smart water meter in a smart home; a sensor in a smart city; and a communication server, a router, a switch, a bridge, a computer, and a mobile phone.

The AP and the STA in this embodiment of this application may also be collectively referred to as a WLAN communication device. The WLAN communication device may include a hardware structure and a software module. The WLAN communication device may implement various communication functions (for example, a function corresponding to the communication method in embodiments of this specification) in a form of the hardware structure, the software module, or a combination of the hardware structure and the software module. A function of the various communication functions may be implemented by using the hardware structure, the software module, or the combination of the hardware structure and the software module.

FIG. 2 is a schematic diagram of a structure of a WLAN communication device according to an embodiment of this application. As shown in FIG. 2, a WLAN communication device 200 may include a processor 201 and a transceiver 205, and optionally, further includes a memory 202.

The transceiver 205 may be referred to as a transceiver unit, a transceiver, a transceiver circuit, or the like, and is configured to implement a transceiver function, for example, communicate with another device or another communication network, and send/receive information. The another communication network may be the Ethernet, a radio access network (radio access network, RAN), a WLAN, or the like. The transceiver 205 may include a receiver and a transmitter. The receiver may be referred to as a receiver machine, a receiver circuit, or the like, and is configured to implement an information receiving function. The transmitter may be referred to as a transmitter machine, a transmitter circuit, or the like, and is configured to implement an information sending function.

The memory 202 may store a computer program or software code or instructions 204, and the computer program or software code or instructions 204 may also be referred to as firmware. The processor 201 may control a medium access control (media access control, MAC) layer and a physical layer (physical layer, PHY) by running a computer program or software code or instructions 203 in the processor 201, or by invoking the computer program or software code or instructions 204 stored in the memory 202, to implement the communication method provided in the following embodiments of this application.

The processor 201 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 301 may be another apparatus having a processing function, for example, a circuit, a component, or a software module. This is not limited.

The memory 304 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or the like. This is not limited.

The processor 201 and the transceiver 205 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The WLAN communication device 200 may further include an antenna 206. It should be noted that the modules included in the WLAN communication device 200 are merely examples for description, and this is not limited in this application.

As described above, the WLAN communication device 200 described in the foregoing embodiment may be an AP or a STA. However, a scope of the WLAN communication device described in this application is not limited thereto, and the structure of the WLAN communication device may not be limited in FIG. 2. The WLAN communication device may be an independent device or may be a part of a large device. For example, the WLAN communication device may be implemented in a form of (1) an independent integrated circuit IC, a chip, a chip system, or a subsystem; (2) a set including one or more ICs, and optionally, the IC set may alternatively include a storage component for storing data and instructions; (3) a module that can be embedded in another device; (4) a receiver, an intelligent terminal, a wireless device, a handheld device, a mobile unit, a vehicle-mounted device, a cloud device, an artificial intelligence device; or (5) others.

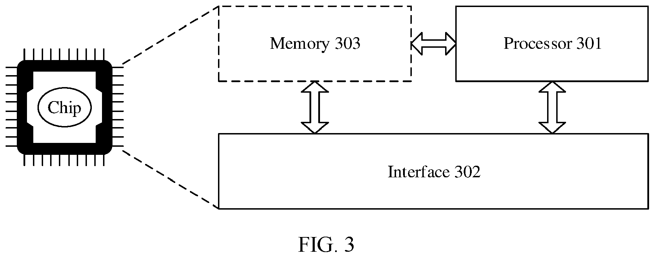

For the WLAN communication device implemented in the form of the chip or the chip system, refer to a schematic diagram of a structure of a chip or a chip system shown in FIG. 3. The chip or the chip system shown in FIG. 3 includes a processor 301 and an interface 302. There may be one or more processors 301, and there may be a plurality of interfaces 302. Optionally, the chip or the chip system may include a memory 303.

Embodiments of this application do not limit the protection scope and applicability of the claims. A person skilled in the art may adaptively change functions and deployments of elements in this application, or omit, replace, or add various processes or components as appropriate without departing from the scope of embodiments of this application.

The communication system and the WLAN communication device provided in this application are described above. To facilitate understanding of the technical solutions in embodiments of this application, the following briefly describes technologies related to this application.

### 1. Channel sounding (channel sounding)

Currently, channel sounding may usually be performed between an AP and a STA by using a null data packet announcement (null data packet announcement, NDPA) frame and a null data packet (null data packet, NDP). The NDP may be understood as a physical layer protocol data unit (physical layer protocol data unit, PPDU) without a data field part. Channel sounding in this application may also be referred to as channel measurement or channel estimation.

Specifically, in a channel sounding procedure, the AP first sends the NDPA frame, where the NDPA frame is used to notify the STA that needs to perform channel sounding. Then, after a short interframe space (short interframe space, SIFS), the AP sends the NDP without the data field part. The STA performs channel estimation by using the NDP, and then feeds back channel state information (channel state information, CSI) by using a beamforming report (beamforming report, BF Report) frame. Finally, the AP obtains the channel state information based on the BF report frame fed back by the STA, to implement functions such as beamforming (beamforming, BF) and resource scheduling. The following describes the foregoing channel sounding procedure in detail with reference to an EHT channel sounding procedure.

The EHT channel sounding procedure includes: a non-trigger based (non-trigger based, Non-TB) EHT channel sounding procedure and a trigger based (trigger based, TB) EHT channel sounding procedure.

The non-trigger based EHT channel sounding procedure is applicable to channel sounding between a single AP and a single STA, and is also applicable to channel sounding between a single AP and a single AP, and channel sounding between a single STA and a single STA. The non-trigger based EHT channel sounding procedure is as follows:

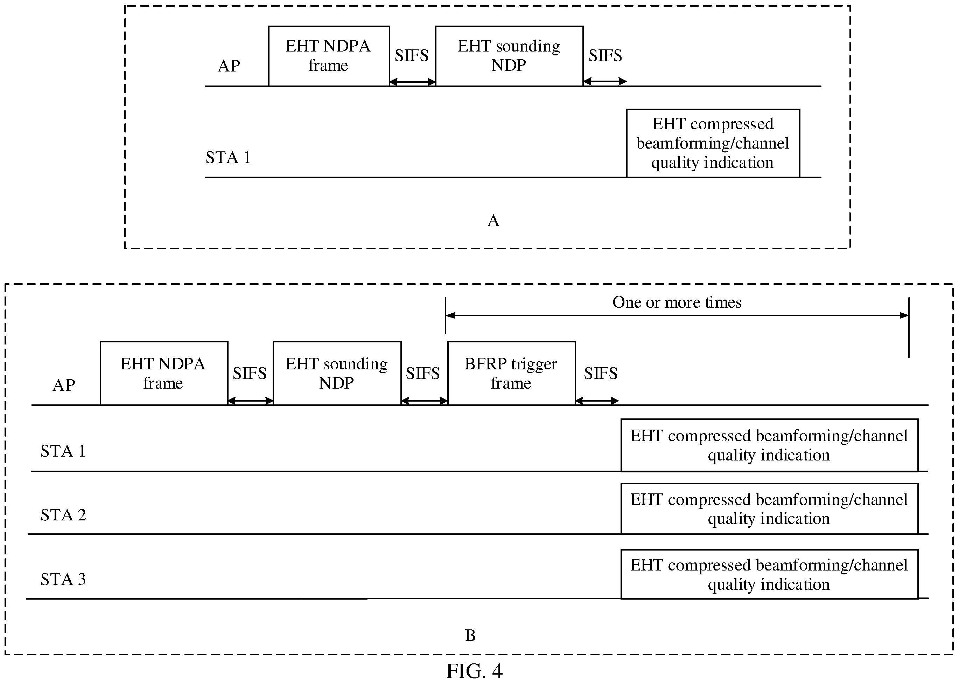

An example in which an AP is a beamforming (channel sounding) initiator (beamformer, Bfer) and a STA is a beamforming responder (beamformee, Bfee) is used. As shown in A in FIG. 4, an AP first sends an EHT null data packet announcement (EHT null data packet announcement, EHT NDPA) frame (frame) to a STA 1, to indicate a channel sounding parameter related to the STA 1. Then, after a short interframe space (short interframe space, SIFS), the AP sends an EHT sounding (sounding) NDP to the STA 1. The STA 1 performs channel estimation by using the EHT sounding NDP, and then feeds back an EHT compressed beamforming (EHT compressed beamforming)/channel quality indication (channel quality indication, CQI) frame. The EHT compressed beamforming/channel quality indication frame may also be referred to as a beamforming report.

As shown in B in FIG. 4, in the trigger based EHT channel sounding procedure, a plurality of Bfees can be triggered to perform channel sounding, thereby further improving channel sounding efficiency. With reference to A and B in FIG. 4, it can be learned that a difference between the trigger based EHT channel sounding procedure and the non-trigger based EHT channel sounding procedure lies in that: in the trigger based EHT channel sounding procedure, after an AP sends an EHT sounding NDP to a STA, the AP may further send a beamforming report poll trigger frame (beamforming report poll trigger frame, BFRP TF) to the STA after one SIFS, to trigger the plurality of Bfees to perform channel sounding. In addition, the AP may send EHT NDPA frames, EHT sounding NDPs, and BFRP TFs to a plurality of STAs (including a STA 1, a STA2, and a STA3).

In conventional technologies, a device that sends an NDPA frame and an NDP may be understood as a Bfer. A device that receives the NDPA frame and the NDP, and feeds back a beamforming report based on the NDPA frame and the NDP may be understood as a Bfee. The beamforming report may include channel state information. The Bfer may be an AP or may be a STA. The Bfee may be a STA or may be an AP.

2. Extremely high throughput multi-user physical layer protocol data unit (extremely high throughput multi-user physical layer protocol data unit, EHT MU PPDU)

WLAN starts from 802.11a/b/g and goes through 802.11n, 802.11ac, 802.11ax, and 802.1 1be being discussed. The name of 802. 1 1ax standard is high efficiency (high efficiency, HE), and the name of the 802.11be standard is an extremely high throughput (extremely high throughput, EHT).

In the 802.11be standard, a name of a physical layer protocol data unit (physical layer protocol data unit, PPDU) is an EHT PPDU. In the 802.11be standard, for multiple user (multiple user, MU) transmission, a format of the EHT PPDU is defined as an EHT MU PPDU. The EHT MU PPDU may support single-user data transmission (including uplink single-user data transmission or downlink single-user data transmission) and downlink multi-user data transmission.

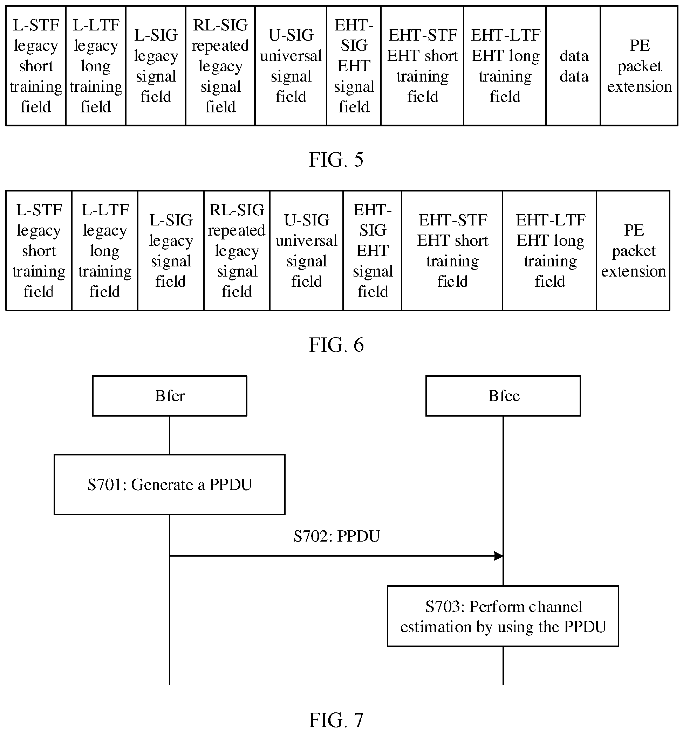

FIG. 5 shows a structure of the EHT MU PPDU that may be used in 802.11be. The EHT MU PPDU includes a preamble portion, a data (data) field, and a packet extension (packet extension, PE) field. The preamble portion includes a legacy short training field (legacy short training field, L-STF), a legacy long training field (legacy long training field, L-LTF), a legacy signal field (legacy signal field, L-SIG), a repeated legacy signal field (repeated L-SIG, RL-SIG), a universal signal (universal SIG, U-SIG) field, an extremely high throughput signal (EHT-SIG) field, an extremely high throughput short training field (extremely high throughput short training field, EHT-STF), and an extremely high throughput long training field (extremely high throughput long training field, EHT-LTF).

For descriptions (or meanings) of fields in the EHT MU PPDU, refer to the following Table 1.

**Table 1**

| Field | Description |
|---|---|
| L-STF legacy short training field | Performs PPDU discovery, coarse synchronization, and automatic gain control. |
| L-LTF legacy long training field | Performs fine synchronization and channel estimation. |
| L-SIG legacy signal field | Used to carry signaling information related to a PPDU length, ensure coexistence of a new device and a legacy device, and indirectly indicate duration of a field following the L-SIG in the PPDU. |
| RL-SIG repeated legacy signal field | Performs repetition of the L-SIG field, and is used to enhance L-SIG reliability. |
| U-SIG universal signal field | Indicates a universal signal field, and carries signaling information required for demodulating a subsequent data field, including some indication information of the EHT-SIG. |
| EHT-SIG extremely high throughput signal field | Carries signaling information required for demodulating the subsequent data field. |
| EHT-STF extremely high throughput short training field | Used for automatic gain control. |
| EHT-LTF extremely high throughput long training field | Used for channel estimation. |
| data (data) | Carries data information. |
| PE packet extension | Used to provide more time for a receive end to process data. |

It should be noted that the foregoing U-SIG may exist in a PPDU in the 802.11be standard and several generations after the 802.11be standard. In addition, in the PPDU in the 802.11be standard and several generations after the 802.11be standard, a subfield in the U-SIG may indicate that the PPDU carrying the U-SIG is an EHT PPDU, and indicate that the EHT PPDU is a PPDU of a specific generation of standard, in other words, indicates the standard corresponding to the EHT PPDU.

### 3. EHT sounding (sounding) NDP

In the 802.11be standard, an EHT sounding NDP is a transmission mode of an EHT MU PPDU. In other words, the EHT sounding NDP is an EHT MU PPDU without a data field part. Certainly, the EHT sounding NDP may also be understood as an NDP or a PPDU without a data field part.

FIG. 6 shows a structure of an EHT sounding NDP that may be used in 802. 1 1be. For descriptions of fields in the EHT sounding NDP, refer to the foregoing Table 1. Details are not described herein again. It can be learned that a difference between the EHT sounding NDP and the EHT MU PPDU mainly lies in that the EHT sounding NDP does not have the data field, in other words, a number of symbols in the data field in the EHT sounding NDP is 0.

The EHT sounding NDP may be used for channel sounding between a Bfer and a Bfee in a non-(non)-OFDMA transmission process. This may help a device (for example, an AP) that sends the EHT sounding NDP to obtain channel state information between a receive end and a transmit end (including the Bfer and the Bfee), and further perform beamforming and resource scheduling.

However, with regard to 802.11be being discussed, the EHT sounding NDP in 802. 1 1be is currently applicable to only non-OFDMA transmission and is not applicable to OFDMA transmission. Specifically, when the AP or a STA performs channel sounding by using the EHT sounding NDP, because the current EHT sounding NDP is designed based on non-OFDMA transmission, the current EHT sounding NDP is applicable to channel sounding only during non-OFDMA transmission. However, during OFDMA based transmission, the AP or the STA cannot perform channel sounding during OFDMA transmission, or cannot accurately perform channel sounding during OFDMA transmission based on the current EHT sounding NDP. That is, a design of the current EHT sounding NDP has a defect. In other words, an OFDMA based NDP used for channel sounding is not designed in 802.11be. As a result, the AP or the STA cannot perform channel sounding during OFDMA based transmission, and the AP or the STA cannot obtain channel state information to implement functions such as beamforming and resource scheduling. Consequently, channel quality is poor and a throughput is low.

An EHT sounding NDP based on non-OFDMA transmission may be understood as a non-OFDMA based EHT sounding NDP (or a non-OFDMA based NDP). Therefore, the EHT sounding NDP based on non-OFDMA transmission may be referred to as the non-OFDMA based NDP.

### 4. Device that implements basic EHT features and device that does not implement basic EHT features

The 802.11be standard being discussed includes two releases: a release 1 (Release 1, R1) and a release 2 (Release 2, R2). A main difference between R1 and R2 lies in features. R1 only covers some basic features, and R2 further covers some other features to be determined. To distinguish devices in the two releases, a device in the release 1 is referred to as a device that implements EHT basic features. In the standard, an attribute value dot11EHTBaseLineFeaturesImplementedOnly being 1 in a management information base is used for representation. A device in the release 2 may be referred to as a device that does not implement EHT basic features, may also be referred to as a device that implements EHT advanced features, and may be represented by using dot11EHTBaseLineFeaturesImplementedOnly being 0. This is not limited in the solutions of the present invention.

In this specification, for ease of understanding, the device in the release 1 may be briefly referred to as an R1 device, and the device in the release 2 may be briefly referred to as an R2 device.

### 5. Validate (validate) and disregard (disregard) in a signal field

In each current standard, to leave room for modification of a subsequent standard, a validate bit or validate state or a disregard bit or disregard state generally exists in the signal field.

For example, in the 802.11be standard being discussed at this stage, a signal field in a physical layer preamble includes: reserved/unused bits (reserved bits), and the reserved/unused bits may be classified into a disregard bit and a validate bit. A value of a (sub)field may be set to a reserved/unused state (entry), and the reserved/unused state (entry) may be divided into a disregard state and a validate state.

If an R1 device finds that a validate bit in a PPDU is not set to a default value (or default value) specified in a standard or values of some subfields are set to validate states, the R1 device needs to wait until defer for the duration of the PPDU (defer for the duration of the PPDU), and transfers release-independent related information to a medium access control (medium access control, MAC) layer, to ensure coexistence of a new device and a legacy device and terminate reception of the PPDU. In this specification, for ease of understanding, the foregoing "ensure coexistence of a new device and a legacy device" may be referred to as "ensure coexistence", and "a validate bit is not set to a default value (or default value) specified in a standard" may be referred to as a "non-default validate bit".

For a disregard bit or a subfield set to a disregard state, if an R1 device does not find the foregoing condition, in other words, the validate bit is not set to the default value (or default value) specified in the standard, or the values of some subfields are set to the validate states, the device ignores the disregard bit or ignores the subfield set to the disregard state, and continues to read another field.

In short, if the validate bit is different from the default value or a subfield is set to a validate state, reception is terminated. The disregard bit may be ignored regardless of a value of the disregard bit or whether a subfield is set to a disregard state.

For example, in a U-SIG field of an EHT sounding NDP, there are five disregard bits and three validate bits. In addition, a U-SIG overflow (U-SIG Overflow) part of an EHT-SIG field in the EHT sounding NDP includes two disregard bits. In the U-SIG field of the EHT sounding NDP, there is a validate state in a joint indication of an uplink/downlink subfield and a PPDU type and compression mode subfield. It is assumed that any one validate bit in a PPDU is assigned a new function in the subsequent standard. When a value is set to a non-default value 0, a current device (an old device already on the market) waits until defer for the duration of the PPDU, and transfers release-independent related information to the MAC layer, to ensure coexistence and terminate reception of the PPDU. Similarly, when a joint indication of an uplink/downlink subfield and a PPDU type and compression mode subfield is a validate state that is not used in a current standard, the current device also waits until defer for the duration of the PPDU, and transfers the release-independent related information to the MAC layer, to ensure coexistence and terminate reception of the PPDU. However, when the disregard bit is assigned a new function in the subsequent standard, regardless of a value of the disregard bit, if the PPDU does not have a non-default validate bit or a validate state, the current device ignores the bit or the subfield, and continues to receive another field.

### 6. Puncturing pattern (puncturing pattern)

In Wi-Fi, one or more channels (which may also be referred to as busy channels) in a plurality of consecutive channels may be in a busy state, and the busy channels cannot provide data transmission services for a user. To improve utilization of a non-busy channel in the plurality of consecutive channels, a transmit end (for example, an AP) may transmit data to a receive end (for example, a STA) on one or more non-busy channels. In addition, to enable the receive end to correctly receive the data on the one or more non-busy channels, when transmitting the data to the receive end, the transmit end further needs to send indication information to the receive end. The indication information indicates the busy channel and a channel carrying the data in the plurality of consecutive channels, and the indication information indicates a puncturing pattern. The busy channel may also be referred to as a punctured (punctured) channel, and the channel carrying the data may be referred to as an unpunctured channel. In this way, channel utilization can be improved, thereby improving a throughput (throughput).

In short, the foregoing conventional technology has the following problem: An OFDMA based NDP used for channel sounding is not designed in 802.11be. As a result, the AP or the STA cannot perform channel sounding during OFDMA based transmission. In addition, a puncturing pattern defined in the 802.11be standard discussed at this stage is not flexible enough.

Based on the foregoing conventional technology, this application provides some PPDUs used in a standard after 802.11ax, for example, an EHT PPDU (including an EHT MU PPDU) or a PPDU after an EHT (which is briefly referred to as an EHT+PPDU). The EHT PPDU is used as an example. The EHT PPDU includes two types: one is an EHT PPDU including a data field, and the other is an EHT PPDU not including a data field. In other words, one is an EHT PPDU used for data transmission, and the other is an EHT PPDU used for channel estimation. The EHT PPDU used for channel estimation includes an extremely high throughput long training field (EHT-LTF) and a packet extension (PE) field. The PE field is adjacent to the EHT-LTF, to be specific, there is no data field between the PE and the EHT-LTF. In other words, the data field is not followed by the EHT-LTF, or a number of symbols in the data field of the PPDU is 0. Such an EHT PPDU not including the data field is an EHT sounding NDP. Similarly, for the EHT+PPDU, the EHT+PPDU may include an EHT-LTF and PE.

When the PPDU used for channel estimation and provided in this application is an EHT sounding NDP and is an NDP transmitted based on OFDMA, the PPDU includes a first field indicating that the PPDU is an EHT sounding NDP transmitted based on OFDMA. For ease of description, the EHT sounding NDP based on OFDMA transmission may be referred to as an OFDMA based NDP or an OFDMA based EHT sounding NDP. In this way, in a scenario in which wireless communication is performed by using the standard (for example, 802.11be) after 802.11ax, a Bfee may determine, based on the first field in the PPDU provided in this application, that the PPDU provided in this application is the OFDMA based NDP, and can perform channel estimation by using the PPDU provided in this application during OFDMA based transmission, to feed back channel state information to a Bfer, to implement functions such as beamforming and resource scheduling for OFDMA transmission, thereby improving channel quality and a throughput.

With reference to the communication method provided in embodiments of this application, the following describes a structure of the PPDU provided in the technical solutions of this application.

FIG. 7 is a schematic flowchart 1 of a communication method according to an embodiment of this application. The method may include the following steps.

S701: A Bfer generates a PPDU.

The PPDU may be the foregoing EHT sounding NDP, and is based on an OFDMA based NDP.

The PPDU used for channel estimation provided in the method embodiment of this application may be applicable to OFDMA transmission, and the PPDU includes a first field indicating that the PPDU is the EHT sounding PPDU and is based on the OFDMA based NDP. In this way, the PPDU may be used by a Bfee to perform channel sounding during OFDMA based transmission. Compared with a non-OFDMA based NDP, the PPDU provided in this application can support a more flexible puncturing pattern, and can perform functions such as beamforming and resource scheduling for OFDMA transmission, thereby improving channel quality and a throughput.

The PPDU used for channel estimation and provided in this embodiment of this application may be any one of four types of PPDUs used for channel estimation and provided in the following embodiment, or any combination of the four types of PPDUs used for channel estimation. These structures may be applied to a PPDU in a standard after 802.11ax.

A first type of PPDU used for channel estimation and provided in this embodiment of this application may include a first field indicating that the PPDU is an OFDMA based NDP. In other words, the first field in the PPDU used for channel estimation and provided in this application indicates that the PPDU is the OFDMA based NDP. Because the OFDMA based NDP supports the more flexible puncturing pattern than the non-OFDMA based NDP, the Bfee may determine, based on the first field in the PPDU, that the PPDU is the OFDMA based NDP, then perform channel estimation by using the PPDU during OFDMA based transmission, and feed back channel state information to the Bfer, to implement the functions such as beamforming and resource scheduling for OFDMA transmission that support the more flexible puncturing pattern, thereby improving channel quality and the throughput.

A second type of PPDU used for channel estimation and provided in this embodiment of this application may include an extremely high throughput signal (EHT-SIG) field. The EHT-SIG may include n user fields, the n user fields may include at least one of a number of spatial streams subfield or a beamformed subfield, and n may be a positive integer. In this way, user fields of a same structure may be used for the PPDU used for channel estimation and provided in this embodiment of this application and a PPDU for performing data transmission based on OFDMA, and procedures in which a receiver parses EHT-SIGs in the PPDU used for channel estimation and the PPDU for performing data transmission based on OFDMA may be the same, so that implementation complexity of the receiver can be reduced.

A third type of PPDU used for channel estimation and provided in this embodiment of this application may include an EHT-SIG. The EHT-SIG may include only a common field, and the common field may include at least one of a number of spatial streams subfield or a beamformed subfield. In this way, the common field may be used to carry the number of spatial streams subfield or the beamformed subfield, thereby reducing overheads of the EHT-SIG.

A fourth type of PPDU used for channel estimation and provided in this embodiment of this application may include a universal signal (U-SIG) field and an EHT-SIG. The U-SIG may include a first punctured channel indication field, and the EHT-SIG may include a second punctured channel indication field. The first punctured channel indication field indicates a puncturing status in an 80 MHz subblock bandwidth of the U-SIG. The second punctured channel indication field indicates a puncturing status in an entire bandwidth of the PPDU. With reference to related descriptions in Manner 7 to Manner 9 below, it can be learned that puncturing patterns of the PPDU are indicated by using the first punctured channel indication field and the second punctured channel indication field, so that more puncturing patterns can be indicated, and the PPDU provided in this application supports more flexible puncturing patterns.

It may be understood that, on a non-mutually exclusive basis, the foregoing four types of PPDUs used for channel estimation and provided in this embodiment of this application may be combined with arbitrarily each other, and a combined PPDU can have effect of several types of PPDUs that are combined. For example, the first type of PPDU used for channel estimation and the fourth type of PPDU used for channel estimation may be combined, and a combined PPDU includes the first field indicating that the PPDU is the OFDMA based NDP, and further includes the first punctured channel indication field and the second punctured channel indication field that support the more flexible puncturing pattern. In this way, when performing channel estimation by using the combined PPDU, the Bfee can use the combined PPDU to implement the functions such as beamforming and resource scheduling for OFDMA transmission, thereby improving channel quality and the throughput. In addition, the Bfee can support the more flexible puncturing pattern.

For another example, the first type of PPDU used for channel estimation to the fourth type of PPDU used for channel estimation may be combined. A combined PPDU includes the fields in the first type of PPDU to the fourth type of PPDU, and the combined PPDU can have effect of all the PPDUs in the first type of PPDU to the fourth type of PPDU.

For specific structures and corresponding technical effects of the foregoing four types of PPDUs, refer to related descriptions below. Details are not described herein again.

Names of a plurality of fields/subfields included in several PPDUs used for channel estimation and provided in this embodiment of this application are determined according to the 802.11be standard after 802.11ax, for example, an EHT-LTF, a STA-ID, a PPDU type and compression mode (PPDU type & compression mode) subfield, the number of spatial streams subfield, the beamformed subfield, a punctured channel indication field, and the EHT-SIG. In this embodiment of this application, the names of the plurality of fields/subfields included in the PPDUs are not limited in this embodiment of this application. In another embodiment, the names of the fields/subfields may alternatively be replaced with other names. For example, the names of these fields/subfields may alternatively be replaced with names of fields corresponding to functions/descriptions in the standard after 802.11ax.

S702: The Bfer sends the PPDU used for channel estimation to the Bfee.

Correspondingly, the Bfee receives the PPDU from the Bfer.

S703: The Bfee performs channel estimation by using the PPDU.

The Bfee may obtain the puncturing status of the PPDU based on the PPDU used for channel estimation and provided in this application, and then perform channel estimation based on the obtained puncturing status and the PPDU provided in this application, to obtain the channel state information. Optionally, after the channel state information is obtained, the communication method shown in FIG. 7 may further include: The Bfee sends a beamforming report including the channel state information to the Bfer.

In this way, in a scenario in which wireless communication is performed by using the standard (for example, 802.11be) after 802.11ax, the Bfee may perform channel estimation by using the PPDU indicated by the first field as the OFDMA based NDP, to obtain the channel state information, and feed back the beamforming report to the Bfer, to implement the functions such as beamforming and resource scheduling for OFDMA transmission, thereby improving channel quality and the throughput.

In this embodiment of this application, the Bfer may be an AP or may be a STA. The Bfee may be a STA or may be an AP.

The specific structures and the corresponding technical effects of the four types of PPDUs used for channel estimation involved in the foregoing method steps are described in detail below.

In some possible implementations, the PPDU transmitted in the communication method in this embodiment of this application may use a structure of the first type of PPDU used for channel estimation and provided in this embodiment of this application.

The first type of PPDU used for channel estimation and provided in this embodiment of this application includes the first field, and the first field indicates that the PPDU is the OFDMA based NDP. In this way, during OFDMA based transmission, the Bfee may perform channel estimation based on the PPDU indicated by the first field as the OFDMA based NDP, and feed back the channel state information to the Bfer, to implement the functions such as beamforming and resource scheduling for OFDMA transmission, thereby improving channel quality and the throughput.

The first type of PPDU used for channel estimation and provided in this embodiment of this application may include at least one of a U-SIG and an EHT-SIG. The first field may be implemented by using a subfield (for example, a reserved/unused bit or a PPDU type and compression mode subfield) included in at least one of the U-SIG and the EHT-SIG. In other words, the first field may be located in at least one of the U-SIG and the EHT-SIG.

The following specifically describes an implementation of the first field with reference to the U-SIG field (refer to Table 2) and the EHT-SIG field.

Table 2 is a possible structural table of the U-SIG in the PPDU used for channel estimation provided in this embodiment of this application. In Table 2, the U-SIG may include the following a plurality of fields: a physical layer version identifier (version identifier) field, a bandwidth field, an uplink/downlink (uplink/downlink, UL/DL) field, a basic service set color (basic service set color, BSS color) field, a transmission opportunity (transmission opportunity, TXOP) field, a disregard bit, a validate bit, a PPDU type and compression mode subfield, a validate bit, a punctured channel indication field, a validate bit, an EHT-SIG modulation and coding scheme (modulation and coding scheme, MCS) field, a number of EHT-SIG symbols (number of EHT-SIG symbols) field, a cyclic redundancy code (cyclic redundancy code, CRC), and a tail (tail) bit. For related descriptions of the fields included in the foregoing U-SIG, refer to descriptions in the following Table 2. Details are not described herein.

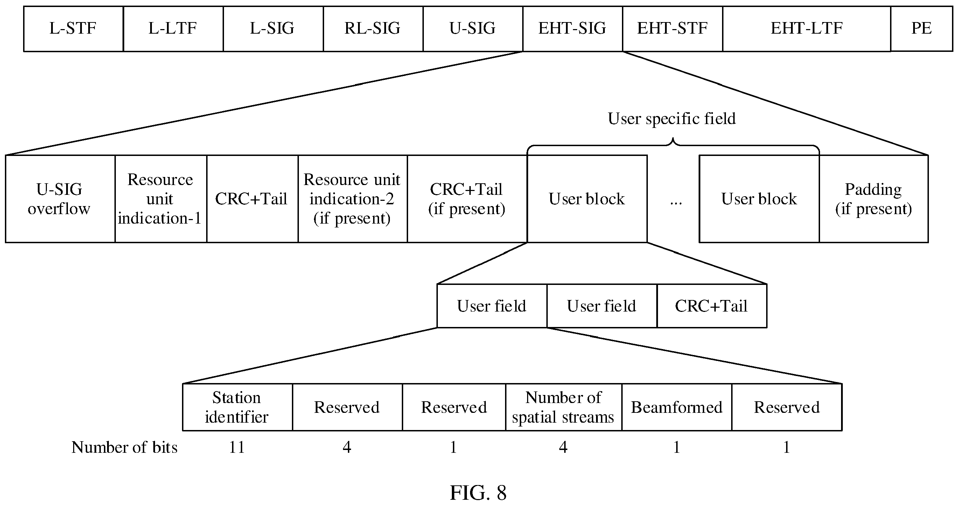

The PPDU used for channel estimation and provided in this embodiment of this application may include the EHT-SIG, and the EHT-SIG may include a common field and a user specific field (user specific field). For descriptions of the common field part and the user specific field part, refer to related descriptions in FIG. 8 and Table 4 below. Details are not described herein again.

**Table 2**

| Bit | | Field | Number of bits (number of bits) | Description |
|---|---|---|---|---|
| U-SIG-1 | B0-B2 | Physical layer version identifier field | 3 | Indicates that the PPDU is which generation of PPDU starting from the EHT. |
| | | | | When the physical layer version identifier subfield indicates 0, it indicates that the PPDU is an EHT PPDU; or when the physical layer version identifier subfield indicates a value other than 0, it indicates a validate state. |
| | B3-B5 | Bandwidth field | 3 | Indicates a bandwidth of the PPDU. When the bandwidth field indicates 0, it indicates that the bandwidth of the PPDU is 20 MHz. When the bandwidth field indicates 1, it indicates that the bandwidth of the PPDU is 40 MHz. When the bandwidth field indicates 2, it indicates that the bandwidth of the PPDU is 80 MHz. When the bandwidth field indicates 3, it indicates that the bandwidth of the PPDU is 160 MHz. When the bandwidth field indicates 4, it indicates that the bandwidth of the PPDU is 320 MHz-1. When the bandwidth field indicates 5, it indicates that the bandwidth of the PPDU is 320 MHz-2. When the bandwidth field indicates a value other than 0 to 5, it indicates the validate state. |
| | B6 | Uplink/Dow nlink field | 1 | Indicates whether the PPDU is sent in UL or DL. |
| | B7-B12 | Basic service set color field | 6 | Indicates a color identifier of a basic service set in which a device that sends the PPDU is located, and is equivalent to identification information of a cell. |
| | B13-B19 | Transmission opportunity field | 7 | Indicates a transmission opportunity. |
| | B20-B24 | Disregard bit | 5 | Disregard bit for a device which implements EHT basic features, and a default value is 1. |
| | B25 | Validate bit | 1 | Validate bit for the device which implements EHT basic features, and a default value is 1. |
| U-SIG-2 | B0-B1 | PPDU type and compression mode subfield | 2 | Indicates a PPDU type and a compression mode. |
| | | | | For specific meanings, refer to the following Table 3-1 or Table 3-2. Table 3-1 is a description table of the uplink/downlink field and the PPDU type and compression mode subfield in Table 2. Table 3-2 is another description table of the uplink/downlink field and the PPDU type and compression mode subfield in Table 2. |
| | B2 | Validate bit | 1 | Validate bit for the device which implements EHT basic features, and a default value is 1. |
| | B3-B7 | Punctured channel indication field | 5 | Indicates a punching pattern. |
| | B8 | Validate bit | 1 | Validate bit for the device which implements EHT basic features, and a default value is 1. |
| | B9-B10 | EHT-SIG modulation and coding scheme field | 2 | Indicates a modulation and coding scheme of the EHT-SIG. |
| | B11-B15 | Number of EHT-SIG symbols field | 5 | Indicates a number of EHT-SIG symbols. |
| | B16-B19 | Cyclic redundancy check | 4 | Used for check of the U-SIG. |
| | B20-B25 | Tail | 6 | Indicates a tail bit, and is used to terminate coding. |

For ease of understanding, Bx-By is explained in this specification as follows: Bx-By indicates an x^{th} bit to a y^{th} bit, where x and y are integers, x≥0, y≥0, and y≥x. For example, B3-B7 indicates a third bit to a seventh bit.

**Table 3-1**

| U-SIG fields | | Description | | | | |
|---|---|---|---|---|---|---|
| Uplink/ Downlink field | EHT PPDU type and compression mode subfield | EHT PPDU format | EHT-SIG present? | Resource unit allocation indication subfields present? | Number of user fields in a PPDU or transmitters in a PPDU | Note |
| 0 (DL) | 0 | EHT MU PPDU | Yes | Yes | ≥1 | The EHT MU PPDU is transmitted based on DL OFDMA, and DL OFDMA includes non-multi-user multiple-input multiple-output (multi-user-multiple-input multiple-output, MU-MIMO) DL OFDMA and MU-MIMO DL OFDMA. |
| | 1 | EHT MU PPDU | Yes | No | 1 for transmissio n to an SU; 0 for EHT sounding NDP. | Transmission to a single user (single user, SU) or EHT sounding NDP. |
| | 2 | EHT MU PPDU | Yes | No | >1 | MU-MIMO DL non-OFDMA transmission. |
| | 3 | - | - | - | - | Validate state. |
| 1 (UL) | 0 | EHT trigger based (trigger based, TB) PPDU | No | - | ≥1 | UL OFDMA transmission (including non-MU-MIMO and MU-MIMO). |
| | 1 | EHT MU PPDU | Yes | No | 1 for transmissio n to an SU; 0 for EHT sounding NDP. | Transmission to an SU or EHT sounding NDP. |
| | 2 | - | - | - | - | Validate state. |
| | 3 | - | - | - | - | Validate state. |

**Table 3-2**

| U-SIG fields | | Description | | | | |
|---|---|---|---|---|---|---|
| Uplink/ Downlink field | EHT PPDU type and compression mode subfield | EHT PPDU format | EHT-SIG present? | Resource unit allocation indication subfields present? | Number of user fields in a PPDU or transmitters in the PPDU | Note |
| 0 (DL) | 0 | EHT MU PPDU | Yes | Yes | ≥1 | The EHT MU PPDU is transmitted based on DL OFDMA, and DL OFDMA includes non-multi-user multiple-input multiple-output (multi-user-multiple-input multiple-output, MU-MIMO) DL OFDMA and MU-MIMO DL OFDMA. |
| | 1 | EHT MU PPDU | Yes | No | 1 for transmission to an SU; 0 for non-OFDMA based NDP | Transmission to a single user (single user, SU) or non-OFDMA based NDP. |
| | 2 | EHT MU PPDU | Yes | No | >1 | MU-MIMO DL non-OFDMA transmission. |
| | 3 | EHT MU PPDU | Yes | Yes | 0 or ≥1 | NDP based on OFDMA transmission, or referred to as EHT sounding NDP based on OFDMA transmission, or referred to as OFDMA based NDP. |
| 1 (UL) | 0 | EHT trigger based (trigger based, TB) PPDU | No | - | ≥1 | UL OFDMA transmission (including non-MU-MIMO and MU-MIMO). |
| | 1 | EHT MU PPDU | Yes | No | 1 for transmission to an SU; 0 for non-OFDMA based NDP | Transmission to an SU or non-OFDMA based NDP. |
| | 2 | - | - | - | - | Validate state. |
| | 3 | EHT MU PPDU | Yes | Yes | 0 or ≥1 | NDP based on OFDMA transmission, or referred to as EHT sounding NDP based on OFDMA transmission, or referred to as OFDMA based NDP. |

Optionally, the first field in the PPDU used for channel estimation and provided in this embodiment of this application includes the PPDU type and compression mode subfield. The PPDU type and compression mode subfield indicates that the PPDU is the OFDMA based NDP. For related descriptions of the PPDU type and compression mode subfield, refer to Table 2. Bit locations of the PPDU type and compression mode subfield in the U-SIG are located at B0-B1 of the U-SIG-2.

In other words, the first field may be implemented by using the PPDU type and compression mode subfield in the U-SIG. For specific implementation, refer to the following Manner 1 and Manner 2:
Manner 1: When the PPDU type and compression mode subfield indicates 3, it indicates that the PPDU is the OFDMA based NDP. In this way, related signaling can be reused as much as possible, and Bfee receiving procedures in other EHT PPDU type and compression modes (for example, OFDMA data transmission) are not changed as much as possible, thereby reducing implementation complexity.

Specifically, refer to the foregoing Table 3-2. For example, the PPDU is a PPDU 1, and a PPDU type and compression mode subfield of the PPDU 1 indicates 3. When receiving the PPDU 1, the Bfee may determine, based on the PPDU type and compression mode subfield indicating 3 in the PPDU 1, that the PPDU 1 is an OFDMA based NDP. In this way, the Bfee may perform channel estimation by using the PPDU 1, and feed back channel state information to the Bfer. The PPDU 1 may be an uplink PPDU or a downlink PPDU, in other words, an uplink/downlink field of the PPDU 1 may indicate 0 or 1.

It should be understood that, in Manner 1, when the PPDU type and compression mode subfield indicates a value other than 3, an indication purpose may be designed based on an actual requirement. For example, the PPDU type and compression mode subfield may be designed as the PPDU type and compression mode subfield shown in Table 3-1 or Table 3-2. This is not limited in this application.

Manner 2: When the PPDU type and compression mode subfield indicates 0 and a number of symbols in a data field of the PPDU is 0, it indicates that the PPDU is the OFDMA based NDP. When receiving the PPDU whose PPDU type and compression mode subfield indicates 0, if determining that the number of symbols in the data field of the PPDU is 0, the Bfee determines that the PPDU is the OFDMA based NDP. If the number of symbols in the data field is 0, it indicates that the PPDU does not include the data field.

Specifically, refer to the foregoing Table 3-1. For example, the PPDU is a PPDU 2, the PPDU 2 does not include a data field, and a PPDU type and compression mode subfield of the PPDU 2 indicates 0. When receiving the PPDU 2, the Bfee may determine that the PPDU 2 is an OFDMA based NDP based on the PPDU type and compression mode subfield indicating 0 in the PPDU 2 and a calculated number of symbols in the data field of the PPDU 2 is 0. In this way, the Bfee may perform channel estimation by using the PPDU 2, and feed back channel state information to the Bfer. The PPDU 2 may be only a downlink PPDU, in other words, an uplink/downlink field of the PPDU 2 indicates 0. In this way, related signaling can be reused as much as possible, and Bfee receiving procedures in other EHT PPDU type and compression modes (for example, OFDMA data transmission) can be reused, thereby reducing additional complexity caused by implementing the OFDMA based NDP.

It should be understood that in Manner 2, when the EHT PPDU type and compression mode subfield in Table 3-1 indicates 3, it may indicate the validate state. In other words, when the PPDU type and compression mode subfield in Manner 2 indicates a value other than 0, an indication purpose may be designed based on an actual requirement.

It can be learned that, compared with Manner 2, Manner 1 can help the Bfee determine that the PPDU is the OFDMA based NDP earlier, and there is no need to determine that the PPDU is the OFDMA based NDP after it is calculated that the number of symbols in the data field of the PPDU is 0. In this way, efficiency of receiving the OFDMA based NDP by the Bfee is improved, a requirement for a processing delay of the Bfee is reduced, and costs of the Bfee are reduced.

Optionally, the first field in the PPDU used for channel estimation and provided in this embodiment of this application includes the PPDU type and compression mode subfield and a second field. That the PPDU is the OFDMA based NDP is indicated based on the PPDU type and compression mode subfield and the second field. The second field may be located in at least one of the U-SIG and the EHT-SIG. The second field may be a validate bit or a disregard bit. Alternatively, refer to Table 2. A location of the second field may be one or more of the following: B20-B24 of the U-SIG-1, B25 of the U-SIG-1, B2 of the U-SIG-2, and B8 of the U-SIG-2.

In other words, the first field may be implemented by using the PPDU type and compression mode subfield and the second field. For specific implementation, refer to the following manners (Manner 3 and Manner 4):
Manner 3: When the PPDU type and compression mode subfield indicates 1, it indicates that the PPDU is the EHT sounding NDP. On this basis, when the second field indicates a first value, it indicates that the PPDU is transmitted based on OFDMA.

The first value may be an agreed value. Refer to the foregoing Table 2. If the second field is a validate bit or a disregard bit, the first value may be a value other than the default value 1 (namely, a non-default value), for example, 0. Indicating that the PPDU is the EHT sounding NDP includes: indicating that the PPDU is an EHT sounding NDP based on OFDMA or an EHT sounding NDP based on non-OFDMA. If the PPDU type and compression mode subfield indicates that the PPDU is the EHT sounding NDP, and the second field indicates that the PPDU is transmitted based on OFDMA, the PPDU is the OFDMA based NDP.

Specifically, refer to the foregoing Table 3-2. For example, the second field is a 25^{th} bit (referred to as a B25 bit below) of the U-SIG-1 field in Table 2, and the PPDU is a PPDU 3. A PPDU type and compression mode subfield of the PPDU 3 indicates 1, and a B25 bit of the PPDU 3 indicates 0. When receiving the PPDU 3, the Bfee may determine that the PPDU 3 is an EHT sounding NDP based on the PPDU type and compression mode subfield indicating 1 in the PPDU 3, and determine, based on the B25 bit indicating 0, that the PPDU 3 is transmitted based on OFDMA. Therefore, with reference to indications of the two fields, the Bfee may determine that the PPDU 3 is an OFDMA based NDP. In this way, the Bfee may perform channel estimation by using the PPDU 3, and feed back channel state information to the Bfer. The PPDU 3 may be an uplink PPDU or a downlink PPDU, in other words, an uplink/downlink field of the PPDU 3 may indicate 0 or 1.

In specific implementation of Manner 3, when the PPDU type and compression mode subfield does not indicate 1, it indicates that the PPDU is not the OFDMA based NDP. Therefore, based on the PPDU type and compression mode subfield not indicating 1, it may be determined that the PPDU is not the OFDMA based NDP, and a value indicated by the second field does not need to be determined. For the Bfee, the Bfee may further determine the value indicated by the second field when determining that the PPDU type and compression mode subfield indicates 1, and determine that the PPDU is the OFDMA based NDP if the second field indicates the first value. When determining that the PPDU type and compression mode subfield does not indicate 1, the Bfee may determine that the PPDU is a non-OFDMA based NDP, and does not need to determine the value indicated by the second field. Based on this, Manner 3 may alternatively be expressed as follows: When the PPDU type and compression mode subfield indicates 1, it indicates that the PPDU is the EHT sounding NDP; and when the second field indicates the first value and the PPDU type and compression mode subfield indicates 1, it indicates that the PPDU is the OFDMA based NDP.

It should be understood that in Manner 3, when the EHT PPDU type and compression mode subfield in Table 3-2 indicates 3, it may indicate the validate state. In other words, when the PPDU type and compression mode subfield in Manner 3 indicates a value other than 0, an indication purpose may be designed based on an actual requirement.

In some possible embodiments, refer to the foregoing Table 3-1. When the PPDU type and compression mode subfield indicates 1, it may indicate that the PPDU is the EHT sounding NDP or undergoes transmission to an SU.

In some possible embodiments, refer to the foregoing Table 3-1. When the PPDU type and compression mode subfield indicates 1, it indicates that the PPDU undergoes transmission to an SU or is the EHT sounding NDP; and when the second field indicates the first value and the PPDU type and compression mode subfield indicates 1, it indicates that the PPDU is the OFDMA based NDP.

In some possible embodiments, refer to the foregoing Table 3-1. When the PPDU type and compression mode subfield indicates 1, an EHT-SIG MCS indicates 0, and the number of EHT-SIG symbols indicates 0 (indicates one symbol), it indicates that the PPDU is the non-OFDMA based NDP. Alternatively, when the second field indicates a fourth value, the PPDU type and compression mode subfield indicates 1, the EHT-SIG MCS indicates 0, and the number of EHT-SIG symbols indicates 0 (indicates one symbol), it indicates that the PPDU is the non-OFDMA based NDP. In other words, this manner may be related to the second field or independent of the second field. The fourth value may be a non-default value or a default value, in other words, the fourth value may be 0 or 1.

In some possible embodiments, refer to the foregoing Table 3-1. When the PPDU type and compression mode subfield indicates 1, the second field indicates a fifth value, and the EHT-SIG MCS and the number of EHT-SIG symbols do not simultaneously indicate 0, it indicates that the PPDU undergoes transmission to an SU. The fifth value may be an inverted value of the first value, to be specific, the fifth value may be a default value, to be specific, the fifth value may be 1.

Manner 4: When the PPDU type and compression mode subfield indicates 0, it indicates that the PPDU is transmitted based on OFDMA; and when a second field indicates a first value, it indicates that the PPDU is the EHT sounding NDP.

If the PPDU type and compression mode subfield indicates that the PPDU is transmitted based on OFDMA, and the second field indicates that the PPDU is the EHT sounding NDP, the PPDU is the OFDMA based NDP.

Specifically, refer to the foregoing Table 3-2. For example, the second field is a 25^{th} bit (referred to as a B25 bit below) of the U-SIG-1 field in Table 2, and the PPDU is a PPDU 4. A PPDU type and compression mode subfield of the PPDU 4 indicates 1, and a B25 bit of the PPDU 4 indicates 0. When receiving the PPDU 4, the Bfee may determine, based on the PPDU type and compression mode subfield indicating 1 in the PPDU 4, that the PPDU 4 is transmitted based on OFDMA, and determine, based on the B25 bit indicating 0, that the PPDU 4 is an EHT sounding NDP. Therefore, with reference to indications of the two fields, the Bfee may determine that the PPDU 4 is the OFDMA based NDP. In this way, the Bfee may perform channel estimation by using the PPDU 4, and feed back channel state information to the Bfer. The PPDU 4 may be an uplink PPDU or a downlink PPDU, in other words, an uplink/downlink field of the PPDU 4 may indicate 0 or 1.

In specific implementation of Manner 4, when the PPDU type and compression mode subfield does not indicate 0, the PPDU is not the OFDMA based NDP. Therefore, based on the PPDU type and compression mode subfield not indicating 0, it may be determined that the PPDU is not the OFDMA based NDP, and a value indicated by the second field does not need to be determined. For the Bfee, the Bfee may further determine the value indicated by the second field when determining that the PPDU type and compression mode subfield indicates 0, and determine that the PPDU is the OFDMA based NDP if the second field indicates the first value. When determining that the PPDU type and compression mode subfield does not indicate 0, the Bfee may determine that the PPDU is a non-OFDMA based NDP, and does not need to determine the value indicated by the second field. Based on this, Manner 4 may alternatively be expressed as follows: When the PPDU type and compression mode subfield indicates 0, it indicates that the PPDU is transmitted based on OFDMA; and when the second field indicates the first value and the PPDU type and compression mode subfield indicates 0, it indicates that the PPDU is the OFDMA based NDP.

It should be understood that in Manner 4, when the EHT PPDU type and compression mode subfield in Table 3-2 indicates 3, it may indicate the validate state. In other words, when the PPDU type and compression mode subfield in Manner 4 indicates a value other than 0, an indication purpose may be designed based on an actual requirement.

In Manner 3, a receive end may process the OFDMA based NDP and the non-OFDMA based NDP by using a same procedure, thereby reducing implementation complexity. Similarly, in Manner 4, a receive end may process the OFDMA based NDP and the PPDU for performing data transmission based on OFDMA by using a same procedure, thereby reducing implementation complexity.

Optionally, the first field in the PPDU used for channel estimation and provided in this embodiment of this application includes the second field, and the second field indicates that the PPDU is the OFDMA based NDP. In other words, the foregoing first field may be implemented by using only the second field. For specific implementation, refer to the following Manner 5:
Manner 5: When a second field indicates a second value, it indicates that the PPDU is the OFDMA based NDP. The second value is similar to the first value, and the second value may be an agreed value. Refer to the foregoing Table 2. If the second field is a validate bit or a disregard bit, the second value may be a value other than the default value 1, for example, 0.

Specifically, for example, the second field is a second bit (referred to as a B2 bit below) of the U-SIG-2 field in Table 2, and the PPDU is a PPDU 5. A B2 bit of the PPDU 5 indicates 0. When receiving the PPDU 5, the Bfee may determine, based on the B2 bit indicating 0, that the PPDU 5 is an OFDMA based NDP. In this way, the Bfee may perform channel estimation by using the PPDU 5, and feed back channel state information to the Bfer. The PPDU 5 may be an uplink PPDU or a downlink PPDU, in other words, an uplink/downlink field of the PPDU 5 may indicate 0 or 1.

Optionally, the first field in the PPDU used for channel estimation and provided in this embodiment of this application includes the station identifier (STA ID) subfield, and the STA-ID subfield indicates that the PPDU is the OFDMA based NDP. The STA-ID subfield is located in a user field of the EHT-SIG. In other words, the first field may be implemented by using the STA-ID subfield in the EHT-SIG. For specific implementation, refer to the following Manner 6:
Manner 6: When the STA-ID subfield is a third value, it indicates that the PPDU is the OFDMA based NDP. The third value may be an agreed value, for example, 2046 or 2045.

For example, when the third value is 2046, and the STA ID is set to 2046, it indicates that the PPDU is the OFDMA based NDP. Because a field indicating a target station already exists in an EHT null data packet announcement (EHT null data packet announcement, EHT NDPA) frame (frame), the STA ID in the user field of the EHT-SIG is used for indication, and an existing subfield of the EHT-SIG may be fully reused, without wasting another reserved field and adding additional overheads.

It can be learned that Manner 6 is a manner in which the second field is replaced with the STA ID in Manner 5. Therefore, for a specific implementation process of this manner, refer to Manner 5. Details are not described herein again.

Further, the first field in the PPDU used for channel estimation and provided in this embodiment of this application includes the PPDU type and compression mode subfield and the STAID, and it may indicate, based on the PPDU type and compression mode subfield and the STA ID, that the PPDU is the OFDMA based NDP. For example, when the PPDU type and compression mode subfield indicates 1, it indicates that the PPDU is the EHT sounding NDP; and when the STA ID indicates the third value, it indicates that the PPDU is transmitted based on OFDMA. It can be learned that this manner is a manner in which the second field is replaced with the STA ID in the foregoing Manner 3 or Manner 4. Therefore, for the specific implementation process of this manner, refer to the foregoing Manner 3 or Manner 4. Details are not described herein again.

It should be noted that the foregoing second field may be a validate bit or a disregard bit, or the second field may be located in one or more of B20-B24 of the U-SIG-1, B25 of the U-SIG-1, B2 of the U-SIG-2, and B8 of the U-SIG-2.

That the foregoing second field may be a validate bit or a disregard bit may be summarized as follows: The second field may be implemented by using an unused field, subfield, or bit in the EHT sounding NDP. When the second field is implemented by using the unused field, subfield, or bit (for example, a validate bit or a disregard bit), a name and a description of the unused field, subfield, or bit may be changed in a standard. For example, when the second field is implemented by using the B25 validate bit in the foregoing Table 2, in the standard (for example, 802.11be) after 802.11ax, a name of the B25 validate bit may be changed to an OFDMA based NDP indication field (subfield). A description may be changed to: If the B25 validate bit indicates 0, it indicates that the PPDU is the OFDMA based NDP.

In some possible implementations, the PPDU transmitted in the communication method in this embodiment of this application may use a structure of the second type of PPDU used for channel estimation and provided in this embodiment of this application.

The second type of PPDU used for channel estimation and provided in this embodiment of this application includes the extremely high throughput signal (EHT-SIG) field. FIG. 8 is a schematic diagram 1 of a possible structure of an EHT-SIG included in the PPDU used for channel estimation according to an embodiment of this application. The EHT-SIG may include a common field and a user specific field.

With reference to FIG. 8 and Table 4, Table 4 is a possible structural table of the common field part included in the EHT-SIG in the PPDU used for channel estimation and provided in this embodiment of this application. The common field part may include the following plurality of subfields (subfields): a spatial reuse (spatial reuse) subfield, a guard interval (guard interval, GI)+long training field size subfield, a number of EHT-LTF symbols (number of EHT-LTF symbols) subfield, a disregard subfield, a resource unit indication-1 (RU allocation subfield 1) subfield, a resource unit indication-2 (RU allocation subfield 2) subfield, a CRC subfield, and a tail bit subfield. A U-SIG overflow (overflow) subfield may include subfields such as the spatial reuse subfield, the guard interval+long training field size subfield, the number of EHT-LTF symbols subfield, and the disregard subfield, that is, include the subfields in B0-B16 of the EHT-SIG shown in Table 4. For related descriptions of the fields/subfields included in the EHT-SIG, refer to descriptions in the following Table 4. Details are not described herein.

**Table 4**

| Bit | Subfield | Number of subfields | Number of bits per subfield | Description |
|---|---|---|---|---|
| B0-B3 | Spatial reuse | 1 | 4 | Indicates a spatial reuse status of the OFDMA based NDP. If the spatial reuse subfield is set to 15, it indicates spatial reuse is not allowed during transmission of the PPDU. |
| B4-B5 | Guard interval+long training field size | 1 | 2 | Indicates a guard interval (guard interval, GI) and an EHT-LTF size. |
| B6-B8 | Number of EHT-LTF symbols | 1 | 3 | Indicates a number of EHT-LTF symbols. |
| B9-B16 | Disregard | 1 | 8 | Indicates a disregard bit, and a default value is 1. |
| B17-B16+9N | Resource unit indication-1 | N | 9 | Indicates an allocation status of a resource unit in the 80 MHz subblock bandwidth of the OFDMA based NDP. |
| | | | | When the bandwidth of the PPDU is 20 MHz or 40 MHz, N=1. When the bandwidth of the PPDU is 80 MHz, 160 MHz, 320 MHz-1, or 320 MHz-2, N=2. When the resource unit indication-1 subfield indicates 26 (which is "000011010" in binary), it indicates that a preamble of a 20 MHz subchannel is punctured. |
| B17+9N-B20+9N | CRC | 1 | 4 | Used for check of B0-B16+9N in the EHT-SIG. |
| B21+9N-B26+9N | tail | 1 | 6 | Indicates a tail bit, and is used to terminate coding. |
| B27+9N-B26+9N+9M | Resource unit indication-2 | M | 9 | When the bandwidth of the PPDU is 160 MHz, M=2. When the bandwidth of the PPDU is 320 MHz-1 or 320 MHz-2, M=6. When the bandwidth of the PPDU is 20 MHz, 40 MHz, or 80 MHz, M=0. |
| | | | | If the resource unit indication-2 subfield exists (M≠0), the resource unit indication-2 subfield indicates an allocation status of a resource unit of the OFDMA based NDP. When the resource unit indication-2 subfield indicates 26 (which is "000011010" in binary), it indicates that a preamble of a 20 MHz subchannel is punctured. |
| B27+9N+9M-B30+9N+9M | CRC | 1 | 4 | If the CRC subfield exists (M≠0), the CRC subfield is used for check of B27+9N-B26+9N+9M in the EHT-SIG. |
| B31+9N+9M-B36+9N+9M | tail | 1 | 6 | Indicates a tail bit, and is used to terminate coding. |

It should be noted that because the PPDU used for channel estimation and provided in this embodiment of this application does not have a data field, the EHT-SIG may not include the following several subfields: a low density parity check (low density parity check, LDPC) extra symbol segment (extra symbol segment) subfield, a pre-forward error control (forward error control, FEC) padding factor (Pre-FEC Padding Factor) subfield, and a packet extension disambiguity (PE Disambiguity) subfield. Therefore, in the foregoing Table 4, B9-B16 of the EHT-SIG are the disregard subfield.

In the second type of PPDU used for channel estimation and provided in this embodiment of this application, the EHT-SIG may include the n user fields, and the n user fields may include at least one of the number of spatial streams (number of spatial streams, NSS) subfield or the beamformed (beamformed) subfield, where n may be a positive integer. In this way, the user fields of the same structure may be used for the PPDU provided in this application and the PPDU for performing data transmission based on OFDMA, and the procedures in which the receiver parses the EHT-SIGs in the PPDU provided in this application and the PPDU for performing data transmission based on OFDMA may be the same, so that implementation complexity of the receiver can be reduced. The number of spatial streams subfield may indicate a number of spatial streams of the PPDU, and the beamformed subfield may indicate whether the PPDU is beamformed.

Specifically, still refer to FIG. 8. The user specific field part may include one or more user blocks (user blocks), and a user block other than a last user block may include two user fields (user fields). The last user block may have one or two user fields. Each user block may further include CRC and a tail bit. The user field may include one or more of the following subfields: a station identifier subfield, a reserved subfield, a number of spatial streams subfield, and a beamformed subfield. In other words, the EHT-SIG may include the n user fields, where n may be a positive integer.

Optionally, each user field may include a number of spatial streams subfield and a beamformed subfield. Because the entire PPDU needs to use a uniform number of spatial streams, if there are a plurality of user fields, values of number of spatial streams subfields in different user fields are the same.

Optionally, only a k^{th} user field in the n user fields includes at least one of a number of spatial streams subfield or a beamformed subfield, where k is a positive integer, and k≤n. In this way, in the PPDU used for channel estimation and provided in this application, only the k^{th} user field is used to carry at least one of the number of spatial streams subfield or the beamformed subfield. Therefore, the overheads of the EHT-SIG can be reduced. Further, k=1, in other words, a first user field may be used to carry at least one of a number of spatial streams subfield or a beamformed subfield.

Optionally, the EHT-SIG may further include a padding (padding) part, and the padding part may be used to pad a number of bits of the EHT-SIG to a complete orthogonal frequency division multiplexing (orthogonal frequency division multiplexing, OFDM) symbol. In this way, a same structure may be used for user specific fields of the PPDU for performing data transmission based on OFDMA and the PPDU used for channel estimation and provided in this application, so that procedures in which the receiver parses the EHT-SIGs may be the same, thereby reducing implementation complexity of the receiver.

It should be noted that because the PPDU provided in this application does not have the data field, the user field in the EHT-SIG may not need to include the following several subfields: a modulation and coding scheme (modulation and coding scheme, MCS) subfield and a coding (coding) subfield. Therefore, bits corresponding to these subfields may be replaced with reserved subfields, for example, 4+1+1 bit reserved subfields in the user fields shown in FIG. 8.

In some possible implementations, the PPDU transmitted in the communication method in this embodiment of this application may use a structure of the third type of PPDU used for channel estimation and provided in this embodiment of this application.

The third type of PPDU used for channel estimation and provided in this embodiment of this application includes the EHT-SIG. The EHT-SIG may include only the common field, and the common field may include at least one of the number of spatial streams subfield or the beamformed subfield.

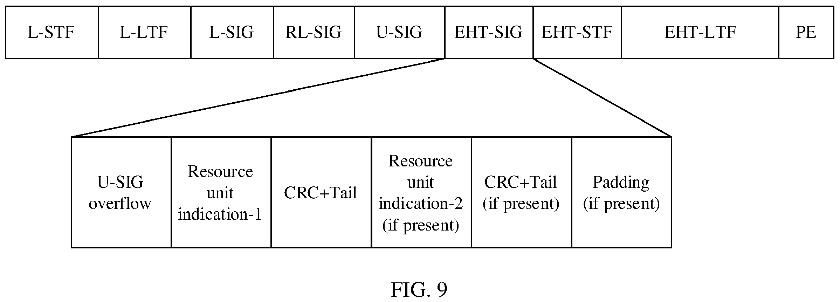

For example, refer to FIG. 9. FIG. 9 is a schematic diagram 2 of a possible structure of the EHT-SIG included in the PPDU used for channel estimation and provided in this embodiment of this application. The EHT-SIG may not include a user field. At least one of a number of spatial streams subfield or a beamformed subfield may be carried in an EHT-SIG overflow.

Specifically, at least one of the number of spatial streams subfield or the beamformed subfield may be carried in a part of or all bits in B9-B 16 of the EHT-SIG. For example, the number of spatial streams subfield is carried in B9-B 11 of the EHT-SIG, and the beamformed subfield is carried in B 12 of the EHT-SIG. In this way, the common field may be used to carry the number of spatial streams subfield or the beamformed subfield, thereby reducing the overheads of the EHT-SIG.

In some possible implementations, the PPDU transmitted in the communication method in this embodiment of this application may use a structure of the fourth type of PPDU used for channel estimation and provided in this embodiment of this application.

The fourth type of PPDU used for channel estimation and provided in this embodiment of this application includes the U-SIG and the EHT-SIG. The U-SIG includes the first punctured channel indication field, and the EHT-SIG includes the second punctured channel indication field. The first punctured channel indication field indicates the puncturing status in the 80 MHz subblock bandwidth of the U-SIG (in other words, whether a subchannel is punctured, and the puncturing status may also be referred to as a puncturing pattern). The second punctured channel indication field indicates the puncturing status in the entire bandwidth of the PPDU.

Optionally, the puncturing status in the 80 MHz subblock bandwidth of the U-SIG is indicated based on a part of or all bits in the first punctured channel indication field. For ease of description, all the bits indicating the puncturing status in the first punctured channel indication field may be referred to as a U-SIG bitmap. In a possible implementation, each bit in the U-SIG bitmap in the first punctured channel indication field indicates whether a corresponding 20 MHz channel in the 80 MHz subblock bandwidth of the U-SIG is punctured. It may be understood that for the 80 MHz subblock bandwidth, the U-SIG bitmap may include at least four bits.

For example, the first punctured channel indication field is the punctured channel indication field (located at B3-B7 of the U-SIG-2) in the U-SIG shown in the foregoing Table 2. For ease of differentiation, the punctured channel indication field of the U-SIG in Table 2 may be referred to as a B3-B7 punctured channel indication field. Four bits (for example, B3-B6 of the U-SIG-2) in the B3-B7 punctured channel indication field may be used as the U-SIG bitmap of the first punctured channel indication field. In other words, the four bits in the B3-B7 punctured channel indication field may indicate the puncturing status in the 80 MHz subblock bandwidth of the U-SIG. A specific implementation may be as follows:

A binary value of a B3-B7 bitmap one-to-one corresponds to a puncturing pattern in the 80 MHz subblock bandwidth of the U-SIG (referred to as a U-SIG bitmap indicating a puncturing status manner below). Specifically, in the B3-B7 bitmap, if a bit is 1, it indicates that a corresponding subchannel is not punctured, or if a bit is 0, it indicates that a corresponding subchannel is punctured. In addition, a plurality of bits in the B3-B7 bitmap respectively correspond to a plurality of subchannels whose frequencies are in ascending order according to a sequence. For example, the 80 MHz subblock bandwidth of the U-SIG includes four 20 MHz subchannels, which are respectively a first subchannel, a second subchannel, a third subchannel, and a fourth subchannel in ascending order of absolute frequencies. If the B3-B7 bitmap is 0111 (binary value), it indicates that the first subchannel is punctured, and the second to fourth subchannels are not punctured. Certainly, in this application, if a bit is 1, it indicates that a corresponding subchannel is punctured, or if a bit is 0, it indicates that a corresponding subchannel is not punctured. This is not limited in this application.

The binary values of the B3-B7 bitmap may include 1111, 0111, 1011, 1101, 1110, 0011, 1100, and 1001. In addition, when the bandwidth of the PPDU is 20 MHz and 40 MHz, the U-SIG bitmap is fixed at 1111, which indicates that when the bandwidth of the PPDU is 20 MHz and 40 MHz, there is no punctured subchannel in the PPDU.

The second punctured channel indication field may include m pieces of indication information indicating channel puncturing statuses. Each piece of indication information may indicate a puncturing status of a corresponding subchannel in the bandwidth of the PPDU, where m is a positive integer. One piece of indication information may be one bit or a subfield including a plurality of bits. This is not limited in this application.

To enable the second punctured channel indication field to indicate the puncturing status in the entire bandwidth of the PPDU, m needs to meet the following condition: m≥a quantity of subchannels in the bandwidth of the PPDU. In this way, the second punctured channel indication field may indicate whether each subchannel in the bandwidth of the PPDU is punctured. In other words, the second punctured channel indication field can indicate all possible puncturing patterns of the PPDU, so that indication of the puncturing patterns is more flexible.

In a possible implementation, m is a variable value, in other words, m is a variable length. A value of m may be determined based on a bandwidth size of the PPDU. For example, if each piece of indication information indicates a puncturing status of a corresponding 20 MHz subchannel in the bandwidth of the PPDU, when the bandwidth of the PPDU is 40 MHz, m=2; when the bandwidth of the PPDU is 80 MHz, m=4; when the bandwidth of the PPDU is 160 MHz, m=8; or when the bandwidth of the PPDU is 320 MHz, m=16. For specific implementation, refer to the following Manner 7, Manner 8, or Manner 9 below. Details are not described herein.

It should be noted that when the bandwidth of the PPDU is 20 MHz or 40 MHz, there is no punctured channel. Therefore, when the bandwidth of the PPDU is 20 MHz, and m=1, indication information indicating a channel puncturing status indicates that no punctured channel exists. When the bandwidth of the PPDU is 40 MHz, and m=2, indication information indicating a channel puncturing status indicates that no punctured channel exists. It may be understood that, in another embodiment, when the bandwidth of the PPDU is 20 MHz or 40 MHz, m may be 0. In another possible implementation, m is a fixed value, in other words, m is a fixed length. For example, m=8 or m=16. When m=8, for a 320 MHz bandwidth, one piece of indication information may indicate a puncturing status of a 40 MHz subchannel. When m=16, for the 320 MHz bandwidth, one piece of indication information may indicate a puncturing status of a 20 MHz subchannel. When the bandwidth of the PPDU is 80 MHz, the first four pieces of indication information of the m pieces of indication information indicating the channel puncturing statuses may indicate puncturing statuses. When the bandwidth of the PPDU is 160 MHz, the first eight pieces of indication information of the m pieces of indication information indicating the channel puncturing statuses may indicate puncturing statuses. For specific implementation, refer to the following Manner 8 or Manner 9. Details are not described herein.

In this embodiment of this application, an implementation of the second punctured channel indication field may include the following Manner 7 to Manner 9:
Manner 7: The second punctured channel indication field may include at least one resource unit indication subfield, and the resource unit indication subfield indicates a puncturing status of a subchannel in the bandwidth of the PPDU.

In an example, the second punctured channel indication field may include the resource unit indication-1 (located at B17-B16+9N of the EHT-SIG), and the resource unit indication-2 (located in B27+9N-B26+9N+9M of the EHT-SIG) that are in the EHT-SIG shown in the foregoing Table 4.

If the bandwidth of the PPDU is 20 MHz or 40 MHz (in other words, N=1 and M=0 in Table 4), a second punctured channel indication field in a content channel includes one resource unit indication-1. If the bandwidth of the PPDU is 80 MHz (in other words, N=2 and M=0 in Table 4), a second punctured channel indication field in a content channel includes two resource unit indications-1. If the bandwidth of the PPDU is 160 MHz (in other words, N=2 and M=2 in Table 4), a second punctured channel indication field in a content channel includes two resource unit indications-1 and two resource unit indications-2. If the bandwidth of the PPDU is 320 MHz-1 or 320 MHz-2 (in other words, N=2 and M=6 in Table 4), a second punctured channel indication field in a content channel includes two resource unit indications-1 and six resource unit indications-2.

Each of the resource unit indication-1 and the resource unit indication-2 may indicate a puncturing status of a 20 MHz subchannel in the bandwidth of the PPDU. For example, in the foregoing Table 4, when the resource unit indication-1 subfield or the resource unit indication-2 subfield indicates 26 (which is "000011010" in binary), it indicates that a preamble of a 20 MHz subchannel is punctured. It should be noted that, when the resource unit indication-1 subfield or the resource unit indication-2 subfield indicates 26, it indicates that a channel is punctured, which is merely an example. Alternatively, another value may indicate that the channel is punctured. This is not limited in this application.

Specifically, a plurality of channels included in one bandwidth of the PPDU may be classified into two types: one is a content channel 1 (content channel 1), and the other is a content channel 2 (content channel 2). Second punctured channel indication fields of EHT-SIGs in all channels included in the content channel 1 are the same, and these second punctured channel indication fields indicate puncturing statuses of all the channels included in the content channel 1. Similarly, second punctured channel indication fields of EHT-SIGs in all channels included in the content channel 2 are the same, and these second punctured channel indication fields indicate puncturing statuses of all the channels included in the content channel 1. In other words, one bandwidth of the PPDU includes two types of second punctured channel indication fields. The first type of second punctured channel indication field may indicate the puncturing statuses of all the channels included in the content channel 1, and the second punctured channel indication field indicates the puncturing statuses of all the channels included in the content channel 2. The following uses an example in which the bandwidth of the PPDU is 320 MHz for specific description.

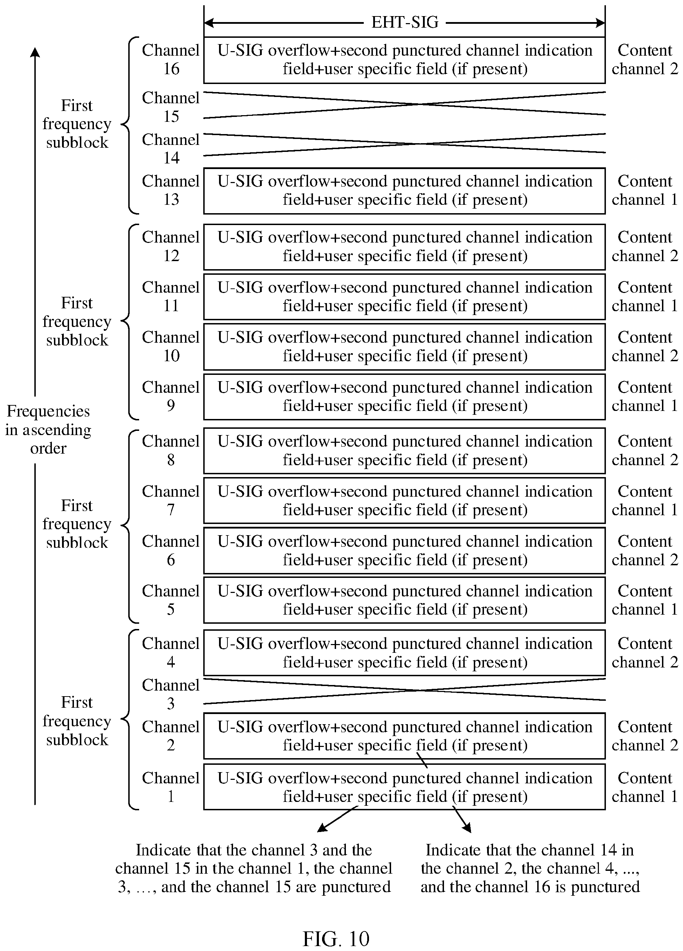

FIG. 10 is a schematic diagram of a puncturing status of a 320 MHz PPDU indicated by using an EHT-SIG according to an embodiment of this application. In FIG. 10, the 320 MHz PPDU includes 16 20 MHz subchannels, which are respectively a channel 1 to a channel 16. The channel 1, the channel 3, ..., and the channel 15 belongs to a content channel 1, and the channel 2, the channel 4, ..., and the channel 16 belongs to a content channel 2. Second punctured channel indication fields in all the channels included in the content channel 1 indicate that the channel 3 and the channel 15 in the content channel 1 are punctured. For example, a second punctured channel indication field in the channel 1 includes two resource unit indications-1 and six resource unit indications-2, and may indicate puncturing statuses of eight channels in the content channel 1. Second punctured channel indication fields in all the channels included in the content channel 2 indicate that the channel 14 in the content channel 2 is punctured. For example, a second punctured channel indication field in the channel 2 includes two resource unit indications-1 and six resource unit indications-2, and may indicate puncturing statuses of eight channels in the content channel 2.

In this way, all possible puncturing patterns of the PPDU may be indicated by using the resource unit indication-1 and the resource unit indication-2 in the EHT-SIG, so that indication of the puncturing patterns is more flexible. In addition, in this way, a change to a common field of the EHT-SIG is small, and implementation complexity can be reduced.

It may be understood that one resource unit indication subfield in Manner 7 is one piece of indication information indicating a puncturing status. In addition, it may be understood that, in Manner 7, a quantity m of indication information in the second punctured channel indication field is variable, and a value of m is determined based on the bandwidth size of the PPDU.

Manner 8: The second punctured channel indication field may include a bitmap subfield, and the bitmap subfield indicates the puncturing status in the entire bandwidth of the PPDU.

In a possible implementation, a number m of bits in the bitmap subfield is variable, and a value of m is determined based on the bandwidth size of the PPDU. In addition, each bit in the bitmap subfield may indicate a puncturing status of a corresponding channel. Specifically, a binary value of the bitmap subfield one-to-one corresponds to a puncturing pattern in the bandwidth of the PPDU. The correspondence manner is similar to the foregoing manner in which the U-SIG bitmap indicates the puncturing status. For related descriptions, refer to the foregoing manner in which the U-SIG bitmap indicates the puncturing status. Details are not described herein again.

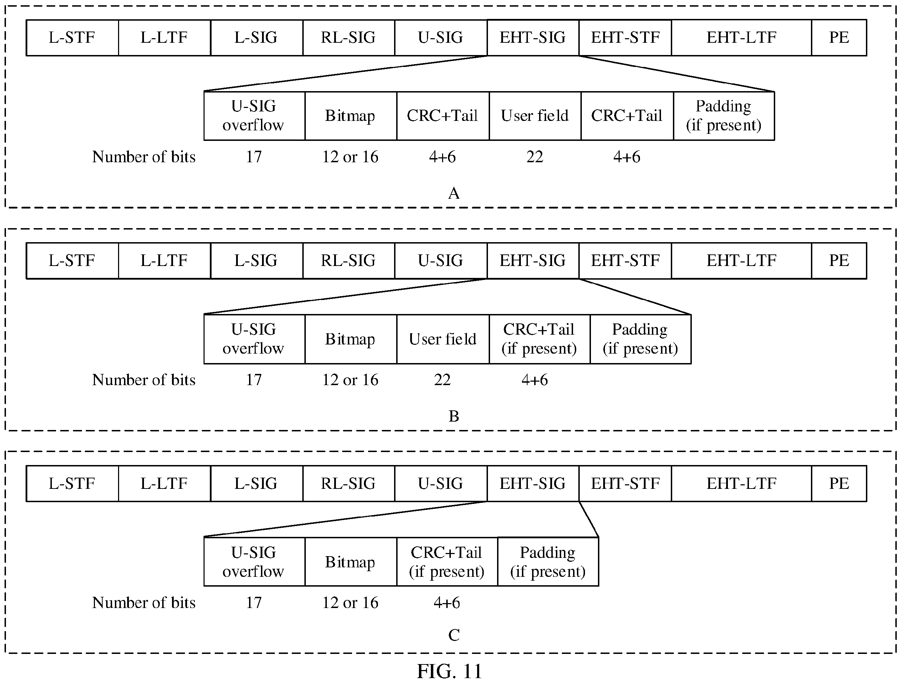

In another possible implementation, a number of bits in the bitmap subfield is m, m is a fixed length, and each bit in the bitmap subfield may indicate a puncturing status of a corresponding channel. The following provides several examples for specific description:
Example 1: A length of the bitmap subfield is 16 bits (that is, m=16), and the bitmap subfield is located in B17-B31 (as shown in A in FIG. 11) of the EHT-SIG. Each bit in the bitmap subfield may indicate a puncturing status of a corresponding 20 MHz subchannel. Specifically, the binary value of the bitmap subfield one-to-one corresponds to the puncturing pattern in the bandwidth of the PPDU. The correspondence manner is similar to the foregoing manner in which the U-SIG bitmap indicates the puncturing status. For the related descriptions, refer to the foregoing manner in which the U-SIG bitmap indicates the puncturing status. Details are not described herein again.

When the bandwidth of the PPDU is 80 MHz, the first four bits of the 16-bit bitmap subfield in Example 1 may indicate a puncturing status. When the bandwidth of the PPDU is 160 MHz, the first eight bits of the 16-bit bitmap subfield in Example 1 may indicate a puncturing status.

In another possible embodiment, a specific implementation in which the bitmap subfield indicates the puncturing status in the entire bandwidth of the PPDU may alternatively be implemented in a form of a mapping table. Specifically, a one-to-one correspondence (as shown in Table 5) between a decimal value of the bitmap subfield and a puncturing pattern in the entire bandwidth of the PPDU may be established, and the puncturing pattern indicated by the bitmap subfield is determined based on the correspondence. For example, refer to Table 5. When a (decimal) value of the bitmap subfield is 0, it indicates that a puncturing pattern in the entire bandwidth of the PPDU is [0 1 1 1 1 1 1 1 1 1 1 1 1 1 1 1], to be specific, the first subchannel is punctured, and the remaining subchannels are not punctured.

**Table 5**

| Puncturing pattern | (Decimal) value of the bitmap subfield |
|---|---|
| [0 1 1 1 1 1 1 1 1 1 1 1 1 1 1 1] | 0 |
| [0 0 1 1 1 1 1 1 1 1 1 1 1 1 1 1] | 1 |
| [0 0 0 1 1 1 1 1 1 1 1 1] | 2 |
| ... | ... |
| [1 1 1 1 0 0 0 1 1 1 1 0 0 0] | 6000 |

It should be noted that Table 5 is merely an example of a mapping table, and does not completely exemplify correspondences between all possible puncturing patterns and corresponding (decimal) values of the bitmap subfield.

Example 2: A length of the bitmap subfield is 16 bits (that is, m=16), and the bitmap subfield is located in B17-B32 (as shown in A in FIG. 11) of the EHT-SIG. The 16-bit bitmap subfield may be divided into four 4-bit fields (referred to as 4-bit fields below) for indication, and each 4-bit field may indicate a puncturing status in one 80 MHz frequency subblock.

Binary values of the 4-bit field may one-to-one correspond to the puncturing patterns in the 80 MHz frequency subblock. The correspondence manner is similar to the foregoing manner in which the U-SIG bitmap indicates the puncturing status. For the related descriptions, refer to the foregoing manner in which the U-SIG bitmap indicates the puncturing status. Details are not described herein again.

In this embodiment of this application, the 4-bit field has a total of 16 binary values that can be used for indication, and the values are respectively: 0000, 0001, 0010, 0011, 0100, 0101, 0110, 0111, 1000, 1001, 1010, 1011, 1100, 1101, 1110, and 1111. The following nine types may indicate the puncturing patterns in the 80 MHz frequency subblock: 1111, 0111, 1011, 1101, 1110, 0011, 1100, 1001, and 0000. The other seven patterns may be reserved, and a reservation sequence is not limited. It should be understood that, when the bandwidth of the PPDU is 80 MHz, the first four bits of the 16-bit bitmap subfield in Example 2 may indicate a puncturing status. When the bandwidth of the PPDU is 160 MHz, the first eight bits of the 16-bit bitmap subfield in Example 2 may indicate a puncturing status.

It should be noted that, in another possible embodiment, that the 4-bit field indicates the puncturing patterns in the 80 MHz frequency subblock may alternatively be implemented in a form of a mapping table. For a specific implementation, refer to related descriptions in the foregoing Table 5. Details are not described herein again.

Example 3: A length of the bitmap subfield is 12 bits (that is, m=12), and the bitmap subfield is located in B17-B28 (as shown in A in FIG. 11) of the EHT-SIG. The 12-bit bitmap subfield may be divided into four 3-bit fields (referred to as 3-bit fields below) for indication, and each 3-bit field may indicate a puncturing status in one 80 MHz frequency subblock.

In this embodiment of this application, the 3-bit field has a total of eight binary values that can be used for indication, and the following eight puncturing patterns in the 80 MHz frequency subblock may be indicated: 1111, 0111, 1011, 1101, 1110, 0011, 1100, and 1001. Specifically, that the 3-bit field indicates the puncturing patterns in the 80 MHz frequency subblock may be implemented in a form of a mapping table. For a specific implementation, refer to the related description in the foregoing Table 5. Details are not described herein again.

When all four 20 MHz subchannels in the 80 MHz frequency subblock are punctured (in other words, a puncturing pattern is 0000), the 3-bit field cannot indicate 0000. In this case, the 3-bit field may indicate one of the other eight values. Then, a third field in an EHT NDPA frame indicates that the entire 80 MHz frequency subblock is punctured, to resolve a problem that the 3-bit field cannot indicate 0000. For related descriptions of the "third field in the EHT NDPA frame" herein, refer to the following descriptions. Details are not described herein. It should be understood that when the bandwidth of the PPDU is 80 MHz, the first three bits of the 12-bit bitmap subfield in Example 3 may indicate a puncturing status. When the bandwidth of the PPDU is 160 MHz, the first six bits of the 12-bit bitmap subfield in Example 3 may indicate a puncturing status.

Example 4: A length of the bitmap subfield is 8 bits (that is, m=8), and the bitmap subfield may be located in B17-B24 (as shown in A in FIG. 11) of the EHT-SIG. Each bit in the bitmap subfield may indicate a puncturing status of a corresponding 20 MHz or 40 MHz subchannel. When the bandwidth of the PPDU is less than or equal to 160 MHz, each bit in the bitmap subfield indicates a puncturing status of a corresponding 20 MHz subchannel. Specifically, the binary value of the bitmap subfield one-to-one corresponds to the puncturing pattern in the bandwidth of the PPDU. The correspondence manner is similar to the foregoing manner in which the U-SIG bitmap indicates the puncturing status. For the related descriptions, refer to the foregoing manner in which the U-SIG bitmap indicates the puncturing status. Details are not described herein again. When the bandwidth of the PPDU is greater than 160 MHz, each bit in the bitmap subfield indicates a puncturing status of a corresponding 40 MHz subchannel. For example, when the bandwidth of the PPDU is 320 MHz, if the bitmap subfield is 01111111, it may indicate that in the 16 20 MHz subchannels in ascending order of absolute frequencies in the 320 MHz PPDU bandwidth, the first subchannel and the second subchannel are punctured, and the third subchannel to the sixteenth subchannel are not punctured. It should be understood that, when the bandwidth of the PPDU is 80 MHz, the first two bits of the 8-bit bitmap subfield in Example 4 may indicate a puncturing status. When the bandwidth of the PPDU is 160 MHz, the first four bits of the 8-bit bitmap subfield in Example 4 may indicate a puncturing status.

It may be understood that one bit in the bitmap subfield in Manner 8 or a value of the bitmap subfield is one piece of indication information indicating a puncturing status.

In the foregoing Manner 8, all possible puncturing patterns of the PPDU may be indicated by using the bitmap subfield, so that indication of the puncturing patterns is more flexible. In addition, a length of the second punctured channel indication field in Manner 7 is 9*M+9*N bits, and a length of the second punctured channel indication field in Manner 8 is 8, 12, or 16 bits. Compared with Manner 7, Manner 8 may further reduce the overheads of the EHT-SIG.

Manner 9: The second punctured channel indication field may include a bitmap subfield, and the bitmap subfield indicates a status of a channel on which transmission is not allowed in the entire bandwidth of the PPDU.

Each bit in the bitmap subfield may indicate whether transmission is allowed on a corresponding channel. For example, if a bit in the bitmap subfield is 0, it indicates that transmission is not allowed on a 20 MHz subchannel; or if a bit in the bitmap subfield is 1, it indicates that transmission is allowed on a 20 MHz subchannel. Certainly, alternatively, if a bit in the bitmap subfield is 0, it indicates that transmission is allowed on a 20 MHz subchannel; or if a bit in the bitmap subfield is 1, it indicates that transmission is not allowed on a 20 MHz subchannel. This is not limited in this application.

It may be understood that Manner 9 can be obtained by replacing the puncturing status in Manner 8 with a status of a channel on which transmission is not allowed. Therefore, for an implementation and corresponding effect of Manner 9, refer to Manner 8. Details are not described herein again.

Optionally, in any one of the foregoing four types of PPDUs, a quantity of user fields in a user specific field of an EHT-SIG may be only one, and the user field may be used to carry a number of spatial streams subfield and a beamformed subfield.

The user field may be used as a user block for check and coding. Alternatively, check and coding may be performed by combining the user field and a U-SIG overflow subfield and the foregoing second punctured channel indication field.

Refer to FIG. 11. An example in which the second punctured channel indication field is the bitmap subfield is used. The user specific field in the EHT-SIG may include the user field, and CRC and a tail bit (refer to A in FIG. 11) that are determined based on the user field. Alternatively, the user specific field of the EHT-SIG includes the U-SIG overflow subfield, the bitmap subfield, and the user field, and CRC and a tail bit (refer to B in FIG. 11) that are determined based on the U-SIG overflow subfield, the bitmap subfield, and the user field.

Optionally, in any one of the foregoing four types of PPDUs, the EHT-SIG may not include a user specific field, and a number of spatial streams subfield and a beamformed subfield may be carried in a common field part of the EHT-SIG.

Refer to C in FIG. 11. An example in which the second punctured channel indication field is the bitmap subfield is used. The number of spatial streams subfield and the beamformed subfield may be carried in a part of or all bits of B9-B16 of a U-SIG overflow subfield of the EHT-SIG. For example, the number of spatial streams subfield is carried in B9-B11 of the EHT-SIG, and the beamformed subfield is carried in B12 of the EHT-SIG. In this way, the common field may be used to carry the number of spatial streams subfield or the beamformed subfield, thereby reducing the overheads of the EHT-SIG.

Optionally, in any one of the foregoing four types of PPDUs, a modulation and coding scheme field of an EHT-SIG of the PPDU may indicate that the EHT-SIG uses an EHT MCS0. To be specific, a modulation scheme used by the EHT-SIG is binary phase shift keying (binary phase shift keying, BPSK), and a modulation coding rate used by the EHT-SIG is 1/2. In this way, transmission reliability of the EHT-SIG can be improved.

Optionally, the number of EHT-SIG symbols field in the foregoing Table 2 indicates the number of EHT-SIG symbols. When the EHT-SIG MCS field indicates 0, it indicates that the number of EHT-SIG symbols may be greater than 1. In this way, the number of EHT-SIG symbols indicated by the number of EHT-SIG symbols field is variable, and a larger number EHT-SIG symbols can be indicated.

Optionally, in any one of the foregoing four types of PPDUs, when a PPDU type and compression mode subfield indicates 1, it indicates that the PPDU undergoes single-user transmission or is the OFDMA based NDP (refer to Table 3). Therefore, in the foregoing Manner 3, an example in which the second field is a validate bit or a disregard bit is used. When the second field indicates a default value, it indicates that the PPDU is the non-OFDMA based NDP when the EHT-SIG MCS indicates 0 and the number of EHT-SIG symbols is 1. In other cases, it indicates that the PPDU undergoes transmission to an SU. When the second field indicates a non-default value, it indicates that the PPDU is the OFDMA based NDP.

Optionally, in any one of the foregoing four types of PPDUs, refer to the foregoing Table 3-1. When the PPDU type and compression mode subfield indicates 1, it may indicate that the PPDU is the EHT sounding NDP or undergoes transmission to an SU.

Optionally, in any one of the foregoing four types of PPDUs, refer to the foregoing Table 3-1. When the PPDU type and compression mode subfield indicates 1, it indicates that the PPDU undergoes transmission to an SU or the EHT sounding NDP; and when the second field indicates a first value and the PPDU type and compression mode subfield indicates 1, it indicates that the PPDU is the OFDMA based NDP.

Optionally, in any one of the foregoing four types of PPDUs, refer to the foregoing Table 3-1. When the PPDU type and compression mode subfield indicates 1, the EHT-SIG MCS indicates 0, and the number of EHT-SIG symbols indicates 0 (indicates one symbol), it indicates that the PPDU is the non-OFDMA based NDP. Alternatively, when the second field indicates a fourth value, the PPDU type and compression mode subfield indicates 1, the EHT-SIG MCS indicates 0, and the number of EHT-SIG symbols indicates 0 (indicates one symbol), it indicates that the PPDU is the non-OFDMA based NDP. In other words, this manner may be related to the second field or independent of the second field. The fourth value may be a non-default value or a default value, in other words, the fourth value may be 0 or 1.

Optionally, in any one of the foregoing four types of PPDUs, refer to the foregoing Table 3-1. When the PPDU type and compression mode subfield indicates 1, the second field indicates a fifth value, and the EHT-SIG MCS and the number of EHT-SIG symbols do not simultaneously indicate 0, it indicates that the PPDU undergoes transmission to an SU. The fifth value is an inverted value of the first value, to be specific, the fifth value may be a default value, to be specific, may be 1.

Optionally, in any one of the foregoing four types of PPDUs, an uplink/downlink field of the PPDU may indicate only downlink (for example, indicate 0). A current standard (for example, 802.11be) supports only DL OFDMA based transmission. The uplink/downlink field in the PPDU indicates only downlink, which may not increase complexity of transmitting, by a STA, an EHT MU PPDU based on OFDMA. Certainly, the uplink/downlink field in the PPDU may alternatively indicate 0 or 1, in other words, support downlink or uplink. When the uplink/downlink field indicates 1, it indicates that the PPDU is sent to an AP. When the uplink/downlink field indicates 0, it indicates another case.

Optionally, the first punctured channel indication field in this embodiment of this application may also indicate the puncturing status in the entire bandwidth of the PPDU. Specifically, the first punctured channel indication field may be implemented by using the 5-bit puncturing indication field (which is located in B3-B7 of the U-SIG-2, refer to the foregoing Table 2) of the U-SIG. For a specific implementation, refer to a puncturing pattern based on non-OFDMA transmission in conventional technologies. A problem of the puncturing pattern based on non-OFDMA transmission in the conventional technology is that there are not many indicated puncturing patterns, and some puncturing patterns cannot be indicated. For example, when the bandwidth of the PPDU is 160 MHz, the 5-bit puncturing indication field indicates only 13 puncturing patterns, and many puncturing patterns cannot be indicated. For example, a puncturing pattern of 11111001 cannot be indicated.

To resolve this problem, in this embodiment of this application, the first punctured channel indication field may indicate that the puncturing status in the entire bandwidth of the PPDU is determined by the second punctured channel indication field in the EHT-SIG. In addition, the second punctured channel indication field indicates the puncturing status in the entire bandwidth of the PPDU. It may be understood that this manner may be applicable to non-OFDMA transmission or OFDMA transmission. This is not limited in this application.

For example, Table 6 shows a puncturing pattern of the PPDU used for channel estimation and provided in this embodiment of this application. It can be learned that for puncturing patterns (represented as specific puncturing patterns in Table 6) that cannot be indicated based on non-OFDMA transmission in the conventional technology, the 5-bit puncturing indication field (that is, the first punctured channel indication field) in the U-SIG in Table 6 may be set to 31, to indicate that the puncturing status in the entire bandwidth of the PPDU is determined by the second punctured channel indication field. For example, when the bandwidth of the PPDU is 160 MHz, and a puncturing pattern of the PPDU is [11111xx1] (or 11111001), the first punctured channel indication field may indicate 31, to indicate, by using the first punctured channel indication field, that the puncturing status in the entire bandwidth of the PPDU is determined by the second punctured channel indication field. In addition, the second punctured channel indication field in the EHT-SIG indicates the puncturing pattern ([11111xx1]). For a manner of indicating the puncturing pattern by using the second punctured channel indication field in the EHT-SIG herein, refer to the foregoing Manner 7 to Manner 9.

In this way, when the first punctured channel indication field indicates the puncturing status in the entire bandwidth of the PPDU, for a puncturing pattern that cannot be indicated by the first punctured channel indication field, the first punctured channel indication field may indicate that the puncturing status in the entire bandwidth of the PPDU is determined by the second punctured channel indication field, and the second punctured channel indication field indicates whether each subchannel in the bandwidth of the PPDU is puncturing, thereby improving flexibility of a puncturing pattern.

It should be noted that, in Table 6, that the first punctured channel indication field indicates 31 is merely an example, and may alternatively be indicated by using another value. This is not limited in this application.

**Table 6**

| PPDU bandwidth (bandwidth, BW) | Cases (cases) | Puncturing pattern (resource unit or multiple resource unit index (resource unit or multiple resource unit, RU or MRU Index)) | Field value (field value) |
|---|---|---|---|
| 20 MHz | No puncturing | [1 1 1 1] (242-tone RU 1) | 0 |
| 40 MHz | No puncturing | [1 1 1 1] (484-tone RU 1) | 0 |
| 80 MHz | No puncturing | [1 1 1 1] (996-tone RU 1) | 0 |
| | 20 MHz puncturing | [x 1 1 1] (484+242-tone MRU 1) | 1 |
| | | [1 x 1 1] (484+242-tone MRU 2) | 2 |
| | | [1 1 x 1] (484+242-tone MRU 3) | 3 |
| | | [1 1 1 x] (484+242-tone MRU 4) | 4 |
| | Specific puncturing pattern | | 31 |
| 160 MHz | No puncturing | [1 1 1 1 1 1 1 1] (2x996-tone RU 1) | 0 |
| | 20 MHz puncturing | [x 1 1 1 1 1 1 1] (996+484+242-tone MRU 1) | 1 |
| | | [1x1 1 1 1 1 1] (996+484+242-tone MRU 2) | 2 |
| | | [11x11111] (996+484+242-tone MRU 3) | 3 |
| | | [1 1 1 x 1 1 1 1] (996+484+242-tone MRU 4) | 4 |
| | | [1 1 1 1 x 1 1 1] (996+484+242-tone MRU 5) | 5 |
| | | [1 1 1 1 1 x 1 1] (996+484+242-tone MRU 6) | 6 |
| | | [1 1 1 1 1 1 x 1] (996+484+242-tone MRU 7) | 7 |
| | | [1 1 1 1 1 1 1 x] (996+484+242-tone MRU 8) | 8 |
| | 40 MHz puncturing | [xx 1 1 1 1 1 1] (996+484-tone MRU 1) | 9 |
| | | [1 1 x x 1 1 1 1] (996+484-tone MRU 2) | 10 |
| | | [1 1 1 1 x x 1 1] (996+484-tone MRU 3) | 11 |
| | | [1 1 1 1 1 1 x x] (996+484-tone MRU 4) | 12 |
| | Specific puncturing pattern | | 31 |
| 320 MHz | No puncturing | [1 1 1 1 1 1 1 1] (4x996-tone RU 1) | 0 |
| | 40 MHz puncturing | [x 1 1 1 1 1 1 1] (3x996+484-tone MRU 1) | 1 |
| | | [1 x 1 1 1 1 1 1] (3x996+484-tone MRU 2) | 2 |
| | | [1 1 x 1 1 1 1 1] (3x996+484-tone MRU 3) | 3 |
| | | [1 1 1 x 1 1 1 1] (3x996+484-tone MRU 4) | 4 |
| | | [1 1 1 1 x 1 1 1] (3x996+484-tone MRU 5) | 5 |
| | | [1 1 1 1 1 x 1 1] (3x996+484-tone MRU 6) | 6 |
| | | [1 1 1 1 1 1 x 1] (3x996+484-tone MRU 7) | 7 |
| | | [1 1 1 1 1 1 1 x] (3x996+484-tone MRU 8) | 8 |
| | 80 MHz puncturing | [x x 1 1 1 1 1 1] (3x996-tone MRU 1) | 9 |
| | | [1 1 x x 1 1 1 1] (3x996-tone MRU 2) | 10 |
| | | [1 1 1 1 x x 1 1] (3x996-tone MRU 3) | 11 |
| | | [1 1 1 1 1 1 x x] (3x996-tone MRU 4) | 12 |
| | Concurrent 80 MHz and 40 MHz puncturing | [x x x 1 1 1 1 1] (2x996+484-tone MRU 7) | 13 |
| | | [x x 1 x 1 1 1 1] (2x996+484-tone MRU 8) | 14 |
| | | [x x 1 1 x 1 1 1] (2x996+484-tone MRU 9) | 15 |
| | | [x x 1 1 1 x 1 1] (2x996+484-tone MRU 10) | 16 |
| | | [x x 1 1 1 1 x 1] (2x996+484-tone MRU 11) | 17 |
| | | [x x 1 1 1 1 1 x] (2x996+484-tone MRU 12) | 18 |
| | | [x 1 1 1 1 1 x x] (2x996+484-tone MRU 1) | 19 |
| | | [1 x 1 1 1 1 x x] (2x996+484-tone MRU 2) | 20 |
| | | [1 1 x 1 1 1 x x] (2x996+484-tone MRU 3) | 21 |
| | | [1 1 1 x 1 1 x x] (2x996+484-tone MRU 4) | 22 |
| | | [1 1 1 1 x 1 x x] (2x996+484-tone MRU 5) | 23 |
| | | [1 1 1 1 1 x x x] (2x996+484-tone MRU 6) | 24 |
| | Specific puncturing pattern | | 31 |

It should be noted that, for ease of understanding, in this specification, a series of data segment including 1 and/or 0 is used to represent puncturing patterns (for example, [1 1 1 1 1 x x x] in Table 6) of a plurality of consecutive channels. In the data segment, 1 indicates one unpunctured channel, and 0 indicates one punctured channel. A plurality of pieces of data (1 or 0) in the data segment respectively correspond to a plurality of channels in ascending order of frequencies from left to right, and a quantity of the plurality of pieces of data in the data segment is consistent with a quantity of the plurality of consecutive channels. For example, 0 1 1 1 or [0 1 1 1] may indicate that in four consecutive channels in ascending order of frequencies, the first channel is punctured, and the second channel to the fourth channel are not punctured. In addition, 0 in the data segment may alternatively be represented by x. This is not limited in this application.

Optionally, any one of the four types of PPDUs used for channel estimation and provided in this embodiment of this application may further include: L-STF, L-LTF, L-SIG, RL-SIG, EHT-STF, EHT-LTF, and PE. For descriptions of these fields, refer to the related descriptions in the foregoing FIG. 5. Details are not described herein again.

It should be understood that a sequence and bits occupied by the fields or subfields in the foregoing Table 2 and Table 4 are not limited in this embodiment of this application, which may alternatively be adjusted based on an actual situation in another embodiment.

It should be noted that bit locations of related fields in signaling in several PPDUs used for channel estimation and provided in this embodiment of this application are determined according to the 802.11be standard after 802.11ax. For example, the bit locations of the PPDU type and compression mode subfield in the U-SIG are located in a bit 0 to a bit 1 (B0-B1) of the U-SIG-2. It should be understood that, with development of the standard, the bit locations of the related fields in the signaling in the several PPDUs used for channel estimation and provided in this embodiment of this application may change accordingly. The bit locations of various fields in the signaling are not limited in this embodiment of this application. In other embodiments (for example, 802.11be and a standard after 802.11be), the locations of these fields may alternatively be adjusted accordingly.

Based on the foregoing conventional technologies, this application provides some structures of EHT NDPA frames used in the standard after 802.11ax. In this way, in a scenario in which wireless communication is performed by using the standard (for example, 802.11be) after 802.11ax, the Bfee (for example, a STA) can perform channel estimation based on an EHT NDPA frame provided in this application during OFDMA based transmission, to feed back channel state information.

With reference to the communication method provided in embodiments of this application, the following describes a structure of the EHT NDPA frame provided in the technical solutions of this application.

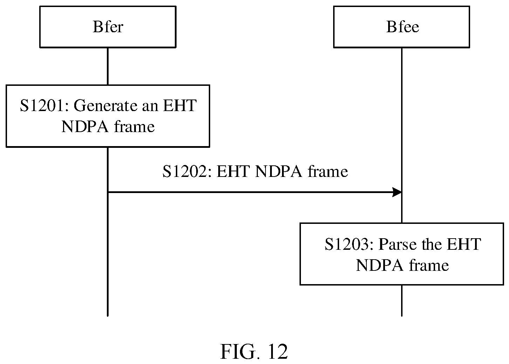

FIG. 12 is a schematic flowchart 2 of a communication method according to an embodiment of this application. The method may include the following steps.

S1201: A Bfer generates an EHT NDPA frame.

The EHT NDPA frame may be an NDPA frame used in a standard (for example, 802.11be) after 802.11ax. The EHT NDPA frame includes a third field indicating a puncturing status in an entire bandwidth of an EHT sounding NDP. In addition, the EHT sounding NDP includes a field indicating that the puncturing status in the entire bandwidth of the EHT sounding NDP is determined based on the third field. For ease of description, in this specification, "the field indicating that the puncturing status in the entire bandwidth of the EHT sounding NDP is determined based on the third field" is referred to as a "fourth field".

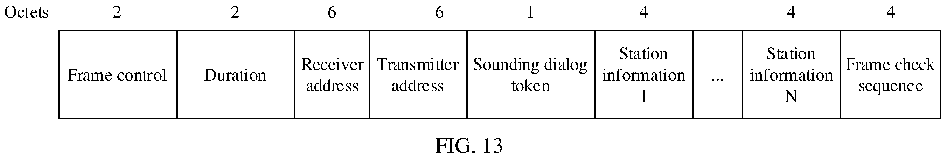

In some possible embodiments, a structure of the EHT NDPA frame provided in this embodiment of this application is shown in FIG. 13. The EHT NDPA frame may further include the following fields: a frame control (frame control) field, a duration (duration) field, a receiver address (receiver address, RA) field, a transmitter address (transmitter address, TA) field, a station information (STA Info) field, and a frame check sequence (frame check sequence, FCS) field. The STA Info field indicates related indication information required by a STA to perform channel sounding. There may be N STAInfo fields, for example, STAInfo 1, STAInfo 2, ..., and STA Info N.

In some possible embodiments, the third field may include at least one piece of first information, and the first information indicates a Bfee (for example, the STA) to feed back channel state information of a subchannel in the bandwidth of the EHT sounding NDP, or the first information indicates that a subchannel in the bandwidth of the EHT sounding NDP is not punctured.

Further, the third field further includes at least one piece of second information, and the second information indicates that a subchannel in the bandwidth of the EHT sounding NDP is punctured.

Specifically, the third field may include a plurality of bits, and one bit may be used to represent one piece of first information or one piece of second information. For example, if a value of a bit is 1, it indicates the first information; or if a value of a bit is 0, it indicates the second information. Certainly, if a value of a bit is 0, it indicates the first information; or if a value of a bit is 1, it indicates the second information. This is not limited in this application.

In other words, one bit in the third field may indicate whether a subchannel in the bandwidth of the EHT sounding NDP is punctured, or may indicate whether a subchannel in the bandwidth of the EHT sounding NDP needs to be measured by the Bfee. For example, the third field may include 16 bits. If a value of the 16 bits is 11x1111111111xx1, it indicates that a puncturing pattern of a 320 MHz bandwidth is [11x1111111111xx1], where 1 indicates that a channel is not punctured, and x indicates that a channel is punctured. To be specific, it indicates that in the 320 MHz bandwidth, a channel 3, a channel 14, and a channel 15 are punctured, and a channel 1, a channel 2, a channel 4 to a channel 13, and a channel 16 are not punctured (refer to FIG. 10).

The third field may be implemented by using one or more fields/subfields in the EHT NDPA frame provided in this application, or the third field may be implemented by using one or more bits in the EHT NDPA frame provided in this application. This is not limited in this application. For example, the third field may be located in the station information, and may be implemented by using some bits (or some fields) in the station information (for a specific implementation, refer to the following descriptions). Certainly, the third field may alternatively be located in another field of the EHT NDPA frame provided in this application. For example, a field used to implement the third field is set between the STA Info and the frame check sequence of the EHT NDPA frame provided in this application. A specific implementation of the third field is not limited in this application.

A structure of the EHT sounding NDP may alternatively use several PPDU structures provided in the communication method shown in FIG. 7.

The fourth field may be implemented by using one or more fields/subfields in the EHT sounding NDP, or the fourth field may be implemented by using one or more bits in the EHT sounding NDP. This is not limited in this application. Optionally, the fourth field may be implemented by using an unused field, subfield, or bit in the EHT sounding NDP. In this way, changes to the NDP can be reduced, and implementation complexity can be reduced.

For example, the fourth field may be implemented by using a validate bit or a disregard bit in a U-SIG and/or an EHT-SIG. Specifically, when the fourth field is implemented by using a validate bit (hereinafter referred to as a B2 validate bit) located at B2 of the U-SIG-2 in Table 2, the B2 validate bit may be set to 0, to indicate that the puncturing status in the entire bandwidth of the EHT sounding NDP is determined based on the third field. It should be understood that when the fourth field is implemented by using the unused field, subfield, or bit (for example, a validate bit or a disregard bit), a name and a description of the unused field, subfield, or bit may be changed in a standard. For example, when the fourth field is implemented by using the B2 validate bit in Table 2, in the standard (for example, 802.11be) after 802.11ax, a name of the B2 validate bit may be changed to a puncturing indication field (subfield) determined by the EHT NDPA frame, and the description may be changed to: if the puncturing indication field (subfield) indicates 0, it indicates that the puncturing status in the entire bandwidth of the EHT sounding NDP is determined by the EHT NDPA frame.

For another example, the fourth field may be implemented by using a punctured channel indication field in the U-SIG. For this implementation, refer to related descriptions below. Details are not described herein again.

It should be understood that a name of the EHT NDPA frame provided in this application is determined according to the standard after 802.11ax. The name of the EHT NDPA frame may be replaced with a corresponding name in the standard after 802.11ax. This is not limited in this application.

Names of a plurality of fields/subfields included in the EHT NDPA frame provided in this embodiment of this application are determined according to the 802.11be standard after 802.11ax, for example, the frame control, the duration, the receiver address, the transmitter address, the station information, and the frame check sequence. In this embodiment of this application, the names of the plurality of fields/subfields included in the EHT NDPA frame are not limited in this embodiment of this application. In another embodiment, the names of the fields/subfields may alternatively be replaced with other names. For example, the names of these fields/subfields may alternatively be replaced with names of fields corresponding to functions/descriptions in the standard after 802.11ax.

It should be understood that the EHT NDPA frame provided in this embodiment of this application may be used to perform channel sounding when the Bfee performs OFDMA based transmission or non-OFDMA based transmission. This is not limited in this application.

S1202: The Bfer sends the EHT NDPA frame to the Bfee.

Correspondingly, the Bfee receives the EHT NDPA frame from an AP.

S1203: The Bfee parses the EHT NDPA frame.

The Bfee may obtain the puncturing status of the EHT sounding NDP based on the EHT NDPA frame provided in this application, and then perform channel estimation based on the obtained puncturing status and the EHT sounding NDP, to obtain channel state information. Optionally, after the channel state information is obtained, the communication method shown in FIG. 12 may further include: The Bfee sends a beamforming report including the channel state information to the Bfer.

In this way, in a scenario in which wireless communication is performed by using the standard (for example, 802.11be) after 802.11ax, during OFDMA based transmission, the Bfee may obtain the third field from the EHT NDPA frame based on an indication of the fourth field in the EHT sounding NDP, determine the puncturing status in the entire bandwidth of the EHT sounding NDP based on an indication of the third field, perform channel estimation based on the puncturing status and the EHT sounding NDP, and feed back the channel state information to the Bfer, to implement functions such as beamforming and resource scheduling for OFDMA transmission, thereby improving channel quality and a throughput.

In this embodiment of this application, the Bfer may be an AP or may be a STA. The Bfee may be a STA or may be an AP.

In this embodiment of this application, after the Bfer generates the EHT NDPA frame in S1301, the communication method shown in FIG. 12 may further include: The Bfer generates the EHT sounding NDP, and sends the EHT sounding NDP to the Bfee. Correspondingly, the Bfee receives the EHT sounding NDP from the Bfer. For this process, refer to the descriptions of the EHT channel sounding procedure in the foregoing conventional technology. Details are not described herein again.

In this embodiment of this application, implementations of implementing the third field by using some bits in the station information are as follows (including at least Manner 10 and Manner 11):
Manner 10: The third field may be a partial bandwidth information subfield in first station information. In other words, the third field may be implemented by using the partial bandwidth information subfield in the first station information.
Manner 11: The third field may be a disallowed subchannel bitmap subfield in second station information. In other words, the third field may be implemented by using the disallowed subchannel bitmap in the second station information.

The first station information and the second station information are two types of station information. In other words, the EHT NDPA frame provided in this application includes two types of station information, which are the first station information and the second station information, respectively.

For example, the first station information in this embodiment of this application may include the following subfields: an association identifier 11 (association identifier 11, AID11) subfield, the partial bandwidth information (partial bw info) subfield, a reserved subfield, a number of columns (number of columns, Nc) index subfield, a feedback type (feedback type) and number of grouping (number of grouping, Ng) subfield, a disambiguation subfield, and a codebook size subfield. For descriptions of the subfields in the foregoing first station information, refer to descriptions in the following Table 7.

**Table 7**

| Subfields in the station information | Description |
|---|---|
| AID11 | Least significant 11 bits of a station association identifier, indicating a target station. |
| Partial bandwidth information | Indicates a subchannel on which the STA needs to feed back channel state information. |
| Number of columns index | Indicates a number of columns of channel state information (compressed beamforming report matrix V) that needs to be fed back by a STA. |
| Feedback type and number of grouping | Indicates that a feedback type and an Ng subcarrier are grouped into one group, where the feedback type includes single-user feedback, multi-user feedback, and channel quality indication (channel quality indication, CQI). The Ng may include 4 and 16. A larger Ng indicates a larger compression amount. |
| Codebook size | Indicates quantization precision, where different precision corresponds to different overheads. |
| Reserved | For subsequent expansion. |

For example, the second station information in this embodiment of this application may include the following subfields: an AID 11 subfield, the disallowed subchannel bitmap subfield, a reserved subfield, and a disambiguation subfield. The disallowed subchannel bitmap indicates a subchannel on which transmission is not allowed in a bandwidth.

In this embodiment of this application, the first station information and the second station information may be distinguished based on a value indicated by the AID11. Specifically, if a value indicated by an AID11 in one piece of station information is a value (for example, 2047, 2046, or 2045) reserved in a standard, the station information is the second station information. Correspondingly, if the value indicated by the AID 11 in the one piece of station information is not the value reserved in the standard, the station information is the first station information.

When the third field is implemented by using the partial bandwidth information subfield in the first station information, the partial bandwidth information subfield may indicate the puncturing status in the entire bandwidth of the EHT sounding NDP. In this way, a station associated with the first station information may determine the puncturing status in the entire bandwidth of the EHT sounding NDP based on the partial bandwidth information subfield in the first station information, and may further feed back the channel state information based on the puncturing status, to implement channel sounding.

Specifically, the partial bandwidth information subfield may include a resolution subfield and a feedback bitmap. Each bit in the feedback bitmap may indicate a puncturing status of a corresponding channel in the bandwidth of the EHT sounding NDP, or each bit in the feedback bitmap may indicate whether transmission is allowed on a corresponding channel in the bandwidth of the EHT sounding NDP, or each bit in the feedback bitmap may indicate whether channel state information of a corresponding channel in the bandwidth of the EHT sounding NDP needs to be fed back. The resolution subfield indicates channel sizes corresponding to all bits in the feedback bitmap, and a value of the resolution subfield may be determined based on an EHT sounding NDP bandwidth value.

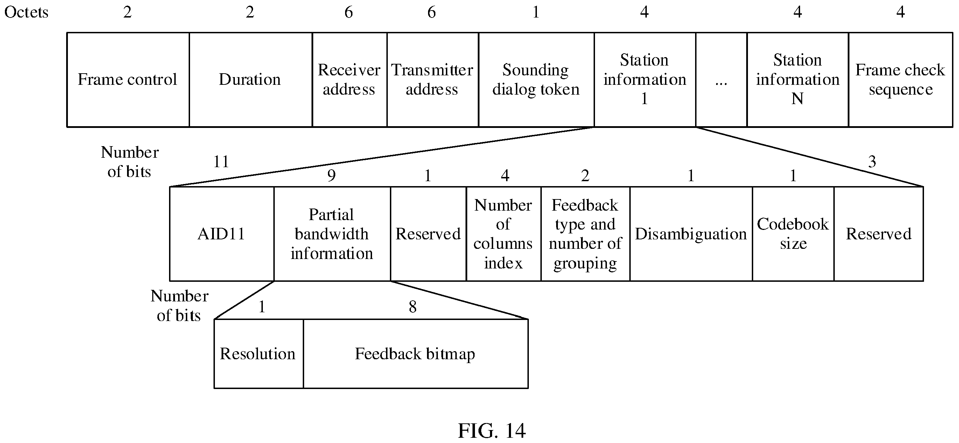

For example, as shown in FIG. 14, station information 1 in an EHT NDPA frame is the first station information, and the station information 1 includes a 9-bit partial bandwidth information subfield. The partial bandwidth information subfield includes a 1-bit resolution subfield and an 8-bit feedback bitmap. When the EHT sounding NDP bandwidth value is 20 MHz, 40 MHz, 80 MHz, or 160 MHz, the resolution subfield indicates 0, which indicates that a channel size corresponding to each bit in the feedback bitmap is 20 MHz. When the EHT sounding NDP bandwidth value is 320 MHz, the resolution subfield indicates 1, which indicates that a channel size corresponding to each bit in the feedback bitmap is 40 MHz.

For example, when the resolution subfield indicates 1, and all the bits in the feedback bitmap indicate 01111111, it indicates that a puncturing pattern of a 320 MHz EHT sounding NDP bandwidth is [0011111111111111]. To be specific, in the 320 MHz EHT sounding NDP bandwidth, the first 40 MHz channel is punctured, and the second 40 MHz channel to the eighth 40 MHz channel are not punctured.

For another example, when the resolution subfield indicates 0, and all the bits in the feedback bitmap indicate 01111111, it indicates that a puncturing pattern of a 160 MHz EHT sounding NDP bandwidth is [01111111]. To be specific, in the 160 MHz EHT sounding NDP bandwidth, the first 20 MHz channel is punctured, and the second 20 MHz channel to the eighth 20 MHz channel are not punctured.

When the third field is implemented by using the disallowed subchannel bitmap in the second station information, the disallowed subchannel bitmap may indicate the puncturing status in the entire bandwidth of the EHT sounding NDP. In this way, the Bfee may determine the puncturing status in the entire bandwidth of the EHT sounding NDP based on the disallowed subchannel bitmap in the second station information, and may further feed back the channel state information based on the puncturing status, to implement channel sounding.

Specifically, each bit in the disallowed subchannel bitmap may indicate a puncturing status of a corresponding channel in the bandwidth of the EHT sounding NDP, or each bit in the disallowed subchannel bitmap may indicate whether transmission is allowed on a corresponding channel in the bandwidth of the EHT sounding NDP, or each bit in the feedback bitmap may indicate whether channel state information of a corresponding channel in the bandwidth of the EHT sounding NDP needs to be fed back.

Optionally, a value of the disallowed subchannel bitmap is 16 bits (B0-B15). The first eight bits (B0-B7) of the disallowed subchannel bitmap may indicate a puncturing status of a corresponding channel in a primary 160 MHz channel in the bandwidth of the EHT sounding NDP, and the last eight bits (B8-B15) of the disallowed subchannel bitmap may indicate a puncturing status of a channel corresponding to a 160 MHz channel in the bandwidth of the EHT sounding NDP. In this way, the first eight bits of the disallowed subchannel bitmap may indicate the primary 160 MHz channel. In addition, an indication of the first eight bits of a disallowed subchannel bitmap of an HE NDPA frame may be consistent with an indication of the first eight bits of the disallowed subchannel bitmap of the EHT NDPA frame. A procedure in which the Bfee parses the HE NDPA frame may be the same as a procedure in which the Bfee parses the EHT NDPA frame, thereby reducing implementation complexity of a receiver.

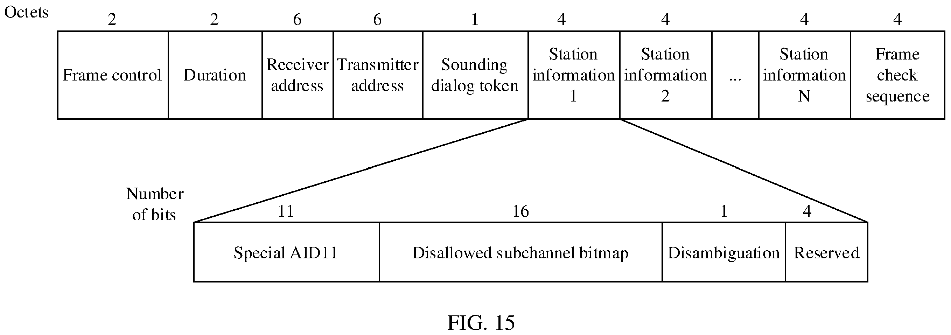

For example, as shown in FIG. 15, station information 1 in an EHT NDPA frame is the second station information, and the station information 1 includes a 16-bit disallowed subchannel bitmap. When the disallowed subchannel bitmap indicates 1101111111111001, it indicates that a puncturing pattern of a 320 MHz EHT sounding NDP bandwidth is [1101111111111001]. To be specific, in the 320 MHz EHT sounding NDP bandwidth, a channel 3, a channel 14, and a channel 15 are punctured, and a channel 1, a channel 2, a channel 4 to a channel 13, and a channel 16 are not punctured (refer to FIG. 10).

Optionally, an i^{th} bit in the disallowed subchannel bitmap may indicate a puncturing status of an i^{th} channel in the bandwidth of the EHT sounding NDP, where i is an integer, and 0≤i≤a quantity of channels in the bandwidth of the EHT sounding NDP. In addition, the channels in the bandwidth of the EHT sounding NDP are arranged in ascending order of frequencies. In this way, implementation logic can be simplified.

For example, as shown in FIG. 15, when the disallowed subchannel bitmap indicates 1101111111111001, the puncturing pattern of the 320 MHz EHT sounding NDP bandwidth is [1101111111111001]. To be specific, in the 320 MHz EHT sounding NDP bandwidth, the channel 3, the channel 14, and the channel 15 are punctured, and the channel 1, the channel 2, the channel 4 to the channel 13, and the channel 16 are not punctured (refer to FIG. 10).

It should be noted that Manner 10 and Manner 11 may be separately implemented or may be combined. This is not limited in this application.

In this embodiment of this application, the manner of implementing the fourth field by using the punctured channel indication field in the U-SIG is as follows:
The fourth field may be a puncturing indication field (located at B3-B7 of the U-SIG-2) of the U-SIG. An unused value in the puncturing indication field of the U-SIG may indicate that the puncturing status in the entire bandwidth of the EHT sounding NDP is determined based on the third field. In other words, if the puncturing indication field of the U-SIG indicates the unused value, it indicates that the puncturing status in the entire bandwidth of the EHT sounding NDP is determined based on the third field. For example, the puncturing indication field of the U-SIG may be set to 30, to indicate that the puncturing status in the entire bandwidth of the EHT sounding NDP is determined by the third field. In this way, the Bfee may determine, according to an indication of the puncturing indication field of the U-SIG, to obtain the puncturing status in the entire bandwidth of the EHT sounding NDP from the third field of the EHT NDPA frame, to implement channel sounding.

It should be noted that the foregoing third field may indicate whether channel state information of a corresponding channel in the bandwidth of the EHT sounding NDP needs to be fed back. For details, refer to the foregoing descriptions about implementing the third field by using the first station information or the second station information. In other words, the Bfee may not need to obtain the puncturing status of the EHT sounding NDP based on the third field and the fourth field, and only needs to obtain, based on the third field, a subchannel on which channel state information needs to be fed back, and then, performs channel sounding based on the EHT sounding NDP and the subchannel that needs to feed back the channel state information. The Bfer needs to ensure that a channel on which channel state information needs to be fed back is not punctured.

It should be noted that, if the fourth field is implemented by using the punctured channel indication field of the U-SIG, for a puncturing pattern that can be indicated by the punctured channel indication field of the U-SIG, for example, a puncturing pattern based on non-OFDMA transmission in the conventional technology, the U-SIG in the EHT sounding NDP may still use the puncturing pattern based on non-OFDMA transmission in the conventional technology. For a puncturing pattern that cannot be indicated by the punctured channel indication field of the U-SIG, for example, when the bandwidth of the EHT sounding NDP is 160 MHz, and a puncturing pattern of the EHT sounding NDP is [11111xx1], a first punctured channel indication field may indicate 30, to indicate, by using the first punctured channel indication field, that the puncturing status in the entire bandwidth of the EHT sounding NDP is determined based on the third field.

It should be noted that the punctured channel indication field of the U-SIG indicates 30 is merely an example, and may alternatively be indicated by using another value. This is not limited in this application.

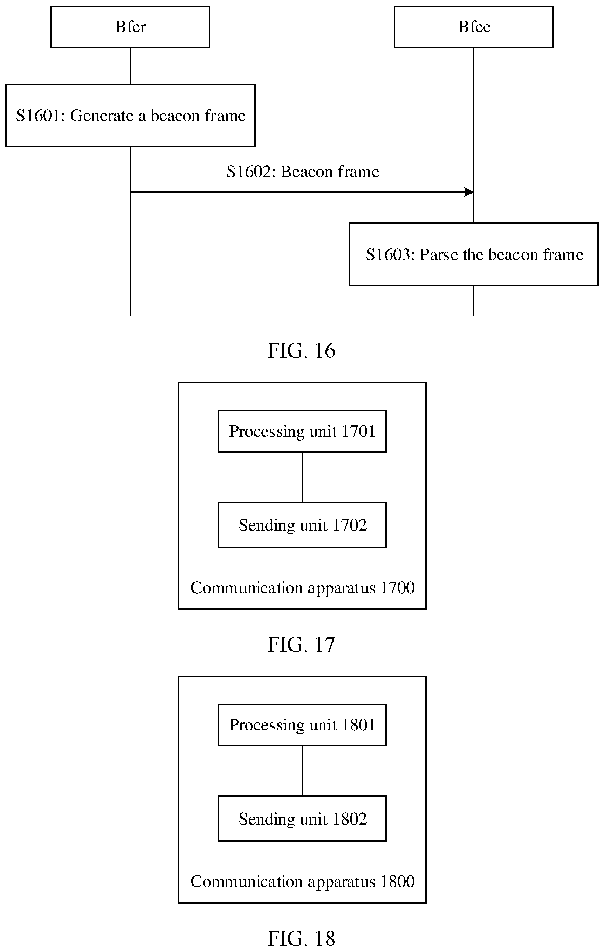

In some possible embodiments, a beacon frame may be further used to indicate a Bfee (for example, a STA) to perform channel sounding. A specific procedure may be shown in FIG. 16. FIG. 16 is a schematic flowchart 3 of a communication method according to an embodiment of this application. Refer to FIG. 16. The method may include the following steps.

S1601: A Bfer generates the beacon frame.

The beacon frame provided in this application may include a fifth field indicating a puncturing status in an entire bandwidth of an EHT sounding NDP. Optionally, the EHT sounding NDP herein includes a field indicating that the puncturing status in the entire bandwidth of the EHT sounding NDP is determined by the fifth field. For ease of description, in this specification, "the field indicating that the puncturing status in the entire bandwidth of the EHT sounding NDP is determined by the fifth field" is referred to as a "sixth field".

In this embodiment of this application, the fifth field may be implemented by using one or more fields/subfields in the beacon frame provided in this application. For a specific implementation and corresponding technical effects of the fifth field, refer to the foregoing third field. For a specific implementation and corresponding technical effects of the sixth field, refer to the foregoing fourth field. Details are not described herein again.

S1602: The Bfer sends the beacon frame to the Bfee.

Correspondingly, the Bfee receives the beacon frame from an AP.

S1603: The Bfee parses the beacon frame.

The Bfee may obtain the puncturing status of the EHT sounding NDP based on the beacon frame provided in this application, and then perform channel estimation based on the obtained puncturing status and the EHT sounding NDP, to obtain channel state information.

The Bfer may periodically generate and send beacon frames to the Bfee. If the Bfer periodically generates and sends the beacon frames to the Bfee, the Bfee may perform channel estimation based on a latest received beacon frame.

Optionally, after the channel state information is obtained, the communication method shown in FIG. 16 may further include: The Bfee sends a beamforming report including the channel state information to the Bfer.

In this way, in a scenario in which wireless communication is performed by using a standard (for example, 802.11be) after 802.11ax, during OFDMA based transmission, the Bfee can perform channel estimation based on the beacon frame provided in this application to obtain the channel state information, and feed back the beamforming report to the Bfer, to implement functions such as beamforming and resource scheduling for OFDMA transmission, thereby improving channel quality and a throughput.

It can be learned that a difference between the communication method shown in FIG. 16 and the communication method shown in FIG. 12 lies in that channel estimation is implemented between the Bfer and the Bfee by using the beacon frame and the EHT sounding NDP. Therefore, for specific implementations and corresponding technical effects of S 1801 to S1803, refer to corresponding step descriptions in FIG. 12. Details are not described herein again.

In the communication methods shown in FIG. 12 and FIG. 16, it can be learned that puncturing indication information is carried by using first frames (such as an EHT NDPA frame and the beacon frame) other than the EHT sounding NDP, and the EHT sounding NDP is used to carry a field indicating that the puncturing indication information is located in another frame, so that the Bfee can perform channel estimation based on the first frame and the EHT sounding NDP during OFDMA based transmission. In addition, in this process, changes to the EHT sounding NDP can be reduced, and implementation complexity can be reduced. In addition, the puncturing indication information carried in the first frame can indicate more puncturing patterns, thereby improving flexibility of the puncturing patterns.

Based on the foregoing conventional technology, this embodiment of this application further provides some structures of a U-SIG used in the standard after 802.11ax.

The U-SIG provided in this embodiment of this application may be applied to PPDUs (including an NDP and a PPDU used for data transmission) in the standard after 802.11ax. In addition, the U-SIG may be applicable to non-OFDMA transmission and OFDMA transmission. This is not limited in this application.

In a possible implementation, a puncturing indication field (located at B3-B7 of the U-SIG-2) of the U-SIG and an unused field or bit (for example, a validate bit or a disregard bit) of the U-SIG may indicate more punching patterns.

Specifically, the puncturing indication field (located at B3-B7 of the U-SIG-2) of the U-SIG and a B8 validate bit (located at B8 of the U-SIG-1) in the U-SIG may indicate more punching patterns. In this case, a length of a field indicating a puncturing pattern is 6 bits, and in a bandwidth (for example, 20 MHz, 80 MHz, or 160 MHz), a maximum of 64 puncturing patterns may be indicated. For ease of description, the puncturing indication field and the B8 validate bit of the U-SIG are briefly referred to as a 6-bit puncturing indication field below.

For example, with reference to Table 8 and Table 9. Table 8 and Table 9 show puncturing patterns that can be supported by the U-SIG provided in this embodiment of this application. Field value columns in Table 8 and Table 9 are values of the 6-bit puncturing indication field.

Compared with a puncturing pattern based on non-OFDMA transmission in the conventional technology, Table 8 and Table 9 can indicate a puncturing pattern that cannot be indicated based on non-OFDMA transmission in the conventional technology. Specifically, compared with the puncturing pattern that cannot be indicated based on non-OFDMA transmission in the conventional technology, puncturing patterns shown in Table 9 may be newly supported by using the 6-bit puncturing indication field in this embodiment of this application. In other words, more puncturing patterns can be indicated, and flexibility of the puncturing patterns is improved.

**Table 8**

| PPDU bandwidth | Cases | Puncturing pattern (RU or MRU Index) | Field value |
|---|---|---|---|
| 20 MHz | No puncturing | [1 1 1 1] (242-tone RU 1) | 0 |
| 40 MHz | No puncturing | [1 1 1 1] (484-tone RU 1) | 0 |
| 80 MHz | No puncturing | [1 1 1 1] (996-tone RU 1) | 0 |
| | 20 MHz puncturing | [x 1 1 1] (484+242-tone MRU 1) | 1 |
| | | [1 x 1 1] (484+242-tone MRU 2) | 2 |
| | | [1 1 x 1] (484+242-tone MRU 3) | 3 |
| | | [1 1 1 x] (484+242-tone MRU 4) | 4 |
| | 40 MHz puncturing | [1 x x 1] | Any value in 5 to 63 |
| 160 MHz | No puncturing | [1 1 1 1 1 1 1 1] (2x996-tone RU 1) | 0 |
| | 20 MHz puncturing | [x 1 1 1 1 1 1 1] (996+484+242-tone MRU 1) | 1 |
| | | [1 x 1 1 1 1 1 1] (996+484+242-tone MRU 2) | 2 |
| | | [1 1 x 1 1 1 1 1] (996+484+242-tone MRU 3) | 3 |
| | | [1 1 1 x 1 1 1 1] (996+484+242-tone MRU 4) | 4 |
| | | [1 1 1 1 x 1 1 1] (996+484+242-tone MRU 5) | 5 |
| | | [1 1 1 1 1 x 1 1] (996+484+242-tone MRU 6) | 6 |
| | | [1 1 1 1 1 1 x 1] (996+484+242-tone MRU 7) | 7 |
| | | [1 1 1 1 1 1 1 X] (996+484+242-tone MRU 8) | 8 |
| | 40 MHz puncturing | [x x 1 1 1 1 1 1] (996+484-tone MRU 1) | 9 |
| | | [1 1 x x 1 1 1 1] (996+484-tone MRU 2) | 10 |
| | | [1 1 1 1 x x 1 1] (996+484-tone MRU 3) | 11 |
| | | [1 1 1 1 1 1 x x] (996+484-tone MRU 4) | 12 |
| | - | New puncturing patterns (refer to descriptions in Table 9) | One or more values in 13 to 63 |
| 320 MHz | No puncturing | [1 1 1 1 1 1 1 1] (4x996-tone RU 1) | 0 |
| | 40 MHz puncturing | [x 1 1 1 1 1 1 1] (3x996+484-tone MRU 1) | 1 |
| | | [1 x 1 1 1 1 1 1] (3x996+484-tone MRU 2) | 2 |
| | | [1 1 x 1 1 1 1 1] (3x996+484-tone MRU 3) | 3 |
| | | [1 1 1 x 1 1 1 1] (3x996+484-tone MRU 4) | 4 |
| | | [1 1 1 1 x 1 1 1] (3x996+484-tone MRU 5) | 5 |
| | | [1 1 1 1 1 x 1 1] (3x996+484-tone MRU 6) | 6 |
| | | [1 1 1 1 1 1 x 1] (3x996+484-tone MRU 7) | 7 |
| | | [1 1 1 1 1 1 1 x] (3x996+484-tone MRU 8) | 8 |
| | 80 MHz puncturing | [x x 1 1 1 1 1 1] (3x996-tone MRU 1) | 9 |
| | | [1 1 x x 1 1 1 1] (3x996-tone MRU 2) | 10 |
| | | [1 1 1 1 x x 1 1] (3x996-tone MRU 3) | 11 |
| | | [1 1 1 1 1 1 x x] (3x996-tone MRU 4) | 12 |
| | Concurrent 80 MHz and 40 MHz puncturing | [x x x 1 1 1 1 1] (2x996+484-tone MRU 7) | 13 |
| | | [x x 1 x 1 1 1 1] (2x996+484-tone MRU 8) | 14 |
| | | [x x 1 1 x 1 1 1] (2x996+484-tone MRU 9) | 15 |
| | | [x x 1 1 1 x 1 1] (2x996+484-tone MRU 10) | 16 |
| | | [x x 1 1 1 1 x 1] (2x996+484-tone MRU 11) | 17 |
| | | [x x 1 1 1 1 1 x] (2x996+484-tone MRU 12) | 18 |
| | | [x 1 1 1 1 1 x x] (2x996+484-tone MRU 1) | 19 |
| | | [1 x 1 1 1 1 x x] (2x996+484-tone MRU 2) | 20 |
| | | [1 1 x 1 1 1 x x] (2x996+484-tone MRU 3) | 21 |
| | | [1 1 1 x 1 1 x x] (2x996+484-tone MRU 4) | 22 |
| | | [1 1 1 1 x 1 x x] (2x996+484-tone MRU 5) | 23 |
| | | [1 1 1 1 1 x x x] (2x996+484-tone MRU 6) | 24 |
| | - | New puncturing patterns (refer to the descriptions in Table 9) | One or more values in 25 to 63 |

**Table 9**

| PPDU bandwidth | Cases | Puncturing pattern | Field value |
|---|---|---|---|
| 80 MHz | 40 MHz puncturing | [1 x x 1] | 5 |
| 160 MHz | 40 MHz puncturing | [1xx1 1111], [1111 1xx1] | One or more values in 13 to 63 |
| | 40 MHz puncturing | [x111 x111], [1x11 x111], [11x1 x111], [111x x111], [x111 1x11], [1x11 1x11], [11x1 1x11], [111x 1x11], [x111 11x1], [1x11 11x1], [11x1 11x1], [111x 11x1], [x111 111x], [1x11 111x], [111x 111x], [111x 111x] | |
| | 60 MHz puncturing | [xx11 x111], [11xx x111], [1xx1 x111], [xx11 1x11], [11xx 1x11], [1xx1 1x11], [xx11 11x1], [11xx 11x1], [1xx1 11x1], [xx11 111x], [11xx 111x], [1xx1 111x], [x111 xx11], [x111 11xx], [x111 1xx1], [1x11 xx11], [1x11 11xx], [1x11 1xx1], [11x1 xx11], [11x1 11xx], [11x1 1xx1], [111x xx11], [111x 11xx], [111x 1xx1] | |
| | 80 MHz puncturing | [xx11 xx11], [11xx xx11], [1xx1 xx11], [xx11 11xx], [11xx 11xx], [1xx1 11xx], [xx11 1xx1], [11xx 1xx1], [1xx1 1xx1] | |
| 320 MHz | 40 MHz puncturing | [1xx1 1111 1111 1111], [1111 1xx1 1111 1111], [1111 1111 1xx1 1111], [1111 1111 1111 1xx1] | One or more values in 25 to 63 |
| | 80 MHz puncturing | [11 xx xx11 1111 1111], [1111 11xx xx11 1111], [1111 1111 11xx xx11] | |
| | 80 MHz puncturing | [xx11 1111 xx11 1111], [11xx 1111 xx11 1111], [1111 xx11 xx11 1111], [11xx 1111 11xx 1111], [xx11 1111 11xx 1111], [11xx 1111 11xx 1111], [1111 xx11 11xx 1111], [11xx 1111 11xx 1111], [xx11 1111 1111 xx11], [11xx 1111 1111 xx11], [1111 xx11 1111 xx11], [11xx 1111 1111 xx11], [xx11 1111 1111 11xx], [11xx 1111 1111 11xx], [1111 xx11 1111 11xx], [11xx 1111 1111 11xx] | |
| | 160 MHz puncturing | [1111 xxxx xxxx 1111] | |

It should be noted that correspondences between field values and puncturing patterns in Table 8 and Table 9 are merely examples. A specific correspondence may be determined based on an actual situation, and may be replaced with another correspondence in another embodiment. The 6-bit puncturing indication field may indicate some puncturing patterns or all puncturing patterns in Table 9, and specifically indicate puncturing patterns that are determined based on an actual requirement.

In addition, refer to Table 9. It can be learned that a case in which a 1-hole or 2-hole puncturing pattern is newly supported is added by using the 6-bit puncturing indication field in this embodiment of this application, so that a design of a filter can be simplified.

In another possible implementation, only an unused value of a puncturing indication field (located at B3-B7 of the U-SIG-2) of the U-SIG may indicate more puncturing patterns. In this case, a length of a field indicating a puncturing pattern is 5 bits, and in a bandwidth (for example, 20 MHz, 80 MHz, or 160 MHz), a maximum of 32 puncturing patterns may be indicated. For ease of description, the puncturing indication field of the U-SIG is briefly referred to as a 5-bit puncturing indication field below.

For example, refer to Table 10 or Table 11. Table 10 or Table 11 shows new puncturing patterns that can be supported. It can be learned that, compared with a puncturing pattern based on non-OFDMA transmission in the conventional technology, puncturing patterns shown in Table 10 or Table 11 may be newly supported by using the 5-bit puncturing indication field in this embodiment of this application. In other words, more puncturing patterns can be indicated, and flexibility of the puncturing patterns is improved. In addition, it can be learned that a case in which a newly supported puncturing pattern in Table 10 or Table 11 is 1-hole or 2-hole is added, so that a design of a filter can be simplified.

It should be understood that the 5-bit puncturing indication field may indicate some puncturing patterns in Table 10, and specifically indicate puncturing patterns that are determined based on an actual requirement. When a bandwidth of a PPDU is 320 MHz, the 5-bit puncturing indication field may indicate that 320 MHz corresponds to a maximum of seven puncturing patterns in Table 10.

It can be learned that, when the newly supported puncturing pattern in Table 11 is 1-hole, optionally, all puncturing patterns in Table 11 may be indicated based on the 5-bit puncturing indication field, to simplify the design of the filter.

**Table 10**

| PPDU bandwidth | Cases | Puncturing pattern | Field value |
|---|---|---|---|
| 80 MHz | 40 MHz puncturing | [1 xx 1] | 5 |
| 160 MHz | 40 MHz puncturing | [1xx1 1111], [1111 1xx1], [111x x111] | One or more values in 13 to 31 |
| | 60 MHz puncturing | [11xx x111], [111x xx11] | |
| | 80 MHz puncturing | [11xx xx11] | |
| 320 MHz | 40 MHz puncturing | [1xx1 1111 1111 1111], [1111 1xx1 1111 1111], [1111 1111 1xx1 1111], [1111 1111 1111 1xx1] | One or more values in 25 to 31 |
| | 80 MHz puncturing | [11 xx xx11 1111 1111], [1111 11xx xx11 1111], [1111 1111 11xx xx11], [xx11 1111 xx11 1111], [11xx 1111 xx11 1111], [1111 xx11 xx11 1111], [11xx 1111 11xx 1111], [xx11 1111 11xx 1111], [11xx 1111 11xx 1111], [1111 xx11 11xx 1111], [11xx 1111 11xx 1111], [xx11 1111 1111 xx11], [11xx 1111 1111 xx11], [1111 xx11 1111 xx11], [11xx 1111 1111 xx11], [xx11 1111 1111 11xx], [11xx 1111 1111 11xx], [1111 xx11 1111 11xx], [11xx 1111 1111 11xx] | |
| | 160 MHz puncturing | [1111 xxxx xxxx 1111] | |

**Table 11**

| PPDU bandwidth | Cases | Puncturing pattern | Field value |
|---|---|---|---|
| 80 MHz | 40 MHz puncturing | [1 x x 1] | 5 |
| 160 MHz | 40 MHz puncturing | [1xx1 1111], [1111 1xx1], [111x x111] | One or more values in 13 to 31 |
| | 60 MHz puncturing | [11xx x111], [111x xx11] | |
| | 80 MHz puncturing | [11xx xx11] | |
| 320 MHz | 40 MHz puncturing | [1xx1 1111 1111 1111], [1111 1xx1 1111 1111], [1111 1111 1xx1 1111], [1111 1111 1111 1xx1] | One or more values in 25 to 31 |
| | 80 MHz puncturing | [11 xx xx11 1111 1111], [1111 11xx xx11 1111], [1111 1111 11xx xx11] | |
| | 160 MHz puncturing | [1111 xxxx xxxx 1111] | |

It should be understood that the U-SIG provided in this embodiment of this application may be applied to the PPDU in the communication method shown in FIG. 7.

The foregoing embodiments provided in this application describe the method provided in embodiments of this application from perspectives of the access point and the station. To implement functions in the methods provided in embodiments of this application, each of the access point and the station may include a hardware structure and a software module, and implement the functions in a form of the hardware structure, the software module, or a combination of the hardware structure and the software module. One of the foregoing functions may be performed by using the hardware structure, the software module, or the combination of the hardware structure and the software module.

FIG. 17 is a schematic modular diagram of a communication apparatus according to an embodiment of this application. A communication apparatus 1700 includes a processing unit 1701 and a sending unit 1702.

The processing unit 1701 is configured to generate a PPDU, where the PPDU includes a first field indicating that the PPDU is an extremely high throughput sounding null data packet EHT sounding NDP transmitted based on orthogonal frequency division multiple access OFDMA, the PPDU further includes an extremely high throughput-long training field EHT-LTF and a packet extension PE field, and the PE field is adjacent to the EHT-LTF.

The sending unit 1702 is configured to send the PPDU.

In this way, a beamformee (beamformee, Bfee) may determine, based on the first field in the PPDU, that the PPDU is an OFDMA based NDP, perform channel estimation by using the PPDU during OFDMA based transmission, and feed back channel state information to a beamformer (beamformer, Bfer), to implement functions such as beamforming and resource scheduling for OFDMA transmission, thereby improving channel quality and a throughput.

The communication apparatus 1700 may be understood as the Bfer. The communication apparatus 1700 may be, for example, an access point or a station, or the communication apparatus is deployed in the access point or the station. The processing unit 1701 of the communication apparatus 1700 may be a processor, and the sending unit 1702 of the communication apparatus 1700 may be a transceiver.

In some possible designs, the first field may include a PPDU type and compression mode subfield.

In some possible designs, the first field may include a PPDU type and compression mode subfield and a second field. The PPDU type and compression mode subfield indicates that the PPDU is the EHT sounding NDP, and the second field indicates that the PPDU is transmitted based on OFDMA.

In some possible designs, the first field may include a station identifier STA-ID subfield, and the STA-ID subfield indicates that the PPDU is the EHT sounding NDP transmitted based on OFDMA.

In some possible designs, the PPDU may further include an extremely high throughput signal EHT-SIG field, the EHT-SIG includes n user fields, the n user fields include at least one of a number of spatial streams subfield or a beamformed subfield, and n is a positive integer.

In some possible designs, the PPDU may further include an EHT-SIG, the EHT-SIG includes only a common field, and the common field may include at least one of a number of spatial streams subfield or a beamformed subfield.

In some possible designs, the PPDU may further include a common signal U-SIG field and the EHT-SIG, the U-SIG may include a first punctured channel indication field, and the EHT-SIG may include a second punctured channel indication field. The first punctured channel indication field indicates a puncturing status in an 80 MHz subblock bandwidth of the U-SIG, and the second punctured channel indication field indicates a puncturing status in an entire bandwidth of the PPDU.

Optionally, the second punctured channel indication field may include at least one resource unit indication subfield, and the resource unit indication subfield indicates a puncturing status of a subchannel in the bandwidth of the PPDU.

Optionally, the second punctured channel indication field may include a bitmap subfield, and the bitmap subfield indicates the puncturing status in the entire bandwidth of the PPDU.

FIG. 18 is a schematic modular diagram of a communication apparatus according to an embodiment of this application. A communication apparatus 1800 includes a processing unit 1801 and a sending unit 1802.

The processing unit 1801 is configured to generate an extremely high throughput null data packet announcement EHT NDPA frame, where the EHT NDPA frame includes a third field indicating a puncturing status in an entire bandwidth of an EHT sounding NDP, and the EHT sounding NDP includes a field indicating that the puncturing status in the entire bandwidth of the EHT sounding NDP is determined based on the third field.

The sending unit 1802 is configured to send the EHT NDPA frame.

In this way, during OFDMA based transmission, a Bfee may obtain the third field from the EHT NDPA frame based on an indication of a fourth field in the EHT sounding NDP, determine the puncturing status in the entire bandwidth of the EHT sounding NDP based on an indication of the third field, perform channel estimation based on the puncturing status and the EHT sounding NDP, and feed back channel state information to a Bfer, to implement functions such as beamforming and resource scheduling for OFDMA transmission, thereby improving channel quality and a throughput.

The communication apparatus 1800 may be understood as the Bfer. The communication apparatus 1800 may be, for example, an access point or a station, or the communication apparatus is deployed in the access point or the station. The processing unit 1801 of the communication apparatus 1800 may be a processor, and the sending unit 1802 of the communication apparatus 1800 may be a transceiver.

In some possible designs, the third field may include at least one piece of first information, and the first information indicates the beamformee Bfee to feed back channel state information of a subchannel in the bandwidth of the EHT sounding NDP, or the first information indicates that a subchannel in the bandwidth of the EHT sounding NDP is not punctured.

Optionally, the third field may further include at least one piece of second information, and the second information indicates that a subchannel in the bandwidth of the EHT sounding NDP is punctured.

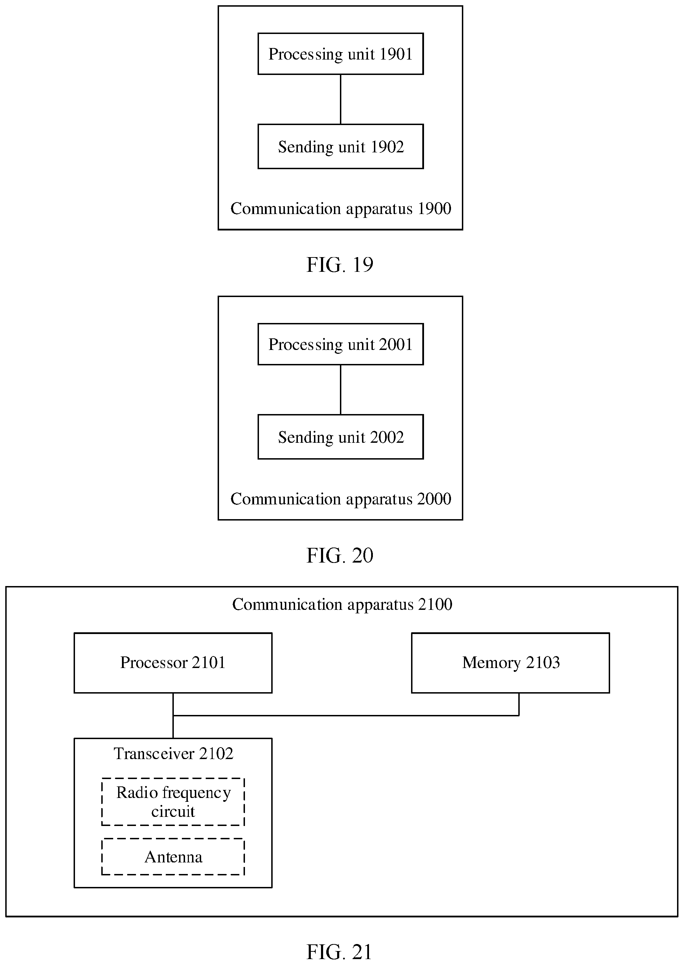

FIG. 19 is a schematic modular diagram of a communication apparatus according to an embodiment of this application. A communication apparatus 1900 includes a processing unit 1901 and a sending unit 1902.

The processing unit 1901 is configured to receive a PPDU, where the PPDU includes a first field indicating that the PPDU is an EHT sounding NDP transmitted based on OFDMA, the PPDU further includes an EHT-LTF and a PE field, and the PE field is adjacent to the EHT-LTF.

The sending unit 1902 is configured to perform channel estimation by using the PPDU.

In this way, a Bfee may determine, based on the first field in the PPDU, that the PPDU is an OFDMA based NDP, perform channel estimation by using the PPDU during OFDMA based transmission, and feed back channel state information to a Bfer, to implement functions such as beamforming and resource scheduling for OFDMA transmission, thereby improving channel quality and a throughput.

The communication apparatus 1900 may be understood as the Bfee. The communication apparatus 1900 may be, for example, an access point or a station, or the communication apparatus is deployed in the access point or the station. The processing unit 1901 of the communication apparatus 1900 may be a processor, and the sending unit 1902 of the communication apparatus 1900 may be a transceiver.

In some possible designs, the first field may include a PPDU type and compression mode subfield.

In some possible designs, the first field may include a PPDU type and compression mode subfield and a second field. The PPDU type and compression mode subfield indicates that the PPDU is the EHT sounding NDP, and the second field indicates that the PPDU is transmitted based on OFDMA.

In some possible designs, the first field may include a STA-ID subfield, and the STA-ID subfield indicates that the PPDU is the EHT sounding NDP transmitted based on OFDMA.

In some possible designs, the PPDU may further include an EHT-SIG, the EHT-SIG includes n user fields, the n user fields include at least one of a number of spatial streams subfield or a beamformed subfield, and n is a positive integer.

In some possible designs, the PPDU may further include an EHT-SIG, the EHT-SIG includes only a common field, and the common field may include at least one of a number of spatial streams subfield or a beamformed subfield.

In some possible designs, the PPDU may further include a U-SIG and the EHT-SIG, the U-SIG may include a first punctured channel indication field, and the EHT-SIG may include a second punctured channel indication field. The first punctured channel indication field indicates a puncturing status in an 80 MHz subblock bandwidth of the U-SIG, and the second punctured channel indication field indicates a puncturing status in an entire bandwidth of the PPDU.

Optionally, the second punctured channel indication field may include at least one resource unit indication subfield, and the resource unit indication subfield indicates a puncturing status of a subchannel in the bandwidth of the PPDU.

Optionally, the second punctured channel indication field may include a bitmap subfield, and the bitmap subfield indicates the puncturing status in the entire bandwidth of the PPDU.

FIG. 20 is a schematic modular diagram of a communication apparatus according to an embodiment of this application. A communication apparatus 2000 includes a receiving unit 2001 and a processing unit 2002.

The receiving unit 2001 is configured to receive an EHT NDPA frame, where the EHT NDPA frame includes a third field indicating a puncturing status in an entire bandwidth of an EHT sounding NDP, and the EHT sounding NDP includes a field indicating that the puncturing status in the entire bandwidth of the EHT sounding NDP is determined based on the third field.

The processing unit 2002 is configured to parse the EHT NDPA frame.

In this way, during OFDMA based transmission, a Bfee may obtain the third field from the EHT NDPA frame based on an indication of a fourth field in the EHT sounding NDP, determine the puncturing status in the entire bandwidth of the EHT sounding NDP based on an indication of the third field, perform channel estimation based on the puncturing status and the EHT sounding NDP, and feed back channel state information to a Bfer, to implement functions such as beamforming and resource scheduling for OFDMA transmission, thereby improving channel quality and a throughput.

The communication apparatus 2000 may be understood as the Bfee. The communication apparatus 2000 may be, for example, a station or an access point, or the communication apparatus 2000 is deployed in the station or the access point. The processing unit 2002 of the communication apparatus 2000 may be a processor, and the receiving unit 2001 of the communication apparatus 2000 may be a transceiver.

In some possible designs, the third field may include at least one piece of first information, and the first information indicates the Bfee to feed back channel state information of a subchannel in the bandwidth of the EHT sounding NDP, or the first information indicates that a subchannel in the bandwidth of the EHT sounding NDP is not punctured.

Optionally, the third field further includes at least one piece of second information, and the second information indicates that a subchannel in the bandwidth of the EHT sounding NDP is punctured.

For related content of the foregoing communication apparatus embodiments, refer to related content of the foregoing method embodiments. Details are not described herein again.

For ease of description, refer to FIG. 21. FIG. 21 is a schematic diagram of a structure of a communication apparatus 2100 according to an embodiment of this application. The communication apparatus 2100 includes a processor 2101 and a transceiver 2102. The communication apparatus 2100 may be a first MLD or a second MLD, or may be a chip in the first MLD or the second MLD. FIG. 14 shows only main components of the communication apparatus 2100. In addition to the processor 2101 and the transceiver 2102, the communication apparatus may further include a memory 2103 and an input/output apparatus (which is not shown in the figure).

The processor 2101 is mainly configured to process a communication protocol and communication data, control the entire communication apparatus, execute a software program, and process data of the software program. The memory 2103 is mainly configured to store the software program and the data. The transceiver 2102 may include a radio frequency circuit and an antenna. The radio frequency circuit is mainly configured to perform conversion between a baseband signal and a radio frequency signal and process the radio frequency signal. The antenna is mainly configured to receive/send a radio frequency signal in a form of an electromagnetic wave. The input/output apparatus, for example, a touchscreen, a display, or a keyboard, is mainly configured to: receive data input by a user and output data to the user.

The processor 2101, the transceiver 2102, and the memory 2103 may be connected through a communication bus.

After the communication apparatus is powered on, the processor 2101 may read the software program in the memory 2103, interpret and execute instructions of the software program, and process the data of the software program. When data needs to be sent wirelessly, the processor 2101 performs baseband processing on the to-be-sent data, and then outputs a baseband signal to the radio frequency circuit. The radio frequency circuit performs radio frequency processing on the baseband signal, and then sends a radio frequency signal in the form of an electromagnetic wave through the antenna. When data is sent to the communication apparatus, the radio frequency circuit receives a radio frequency signal through the antenna, converts the radio frequency signal into a baseband signal, and outputs the baseband signal to the processor 2101. The processor 2101 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus. This application further provides a chip, and the chip may implement a function of any one of the foregoing method embodiments by executing programs or instructions.

The communication apparatus may be an independent device or may be a part of a large device. For example, the communication apparatus may be:
(1) an independent integrated circuit IC, a chip, or a chip system or subsystem;
(2) a set of one or more ICs, where optionally, the IC set may also include a storage component configured to store data and instructions;
(3) an ASIC, for example, a modem (Modem);
(4) a module that can be embedded in another device;
(5) a receiver, an intelligent terminal, a wireless device, a handheld device, a mobile unit, a vehicle-mounted device, a cloud device, an artificial intelligence device, and the like; and
(6) others.

When a specific implementation of the communication apparatus in this embodiment of this application is a chip, the chip may be implemented by a processor. The processor may be configured to perform, for example, but not limited to, baseband related processing. The chip may further include a transceiver. The transceiver may be configured to perform, for example, but not limited to, radio frequency receiving and receiving. The foregoing components may be separately disposed on chips that are independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of integrated circuit technologies, more components may be integrated on a same chip. For example, the digital baseband processor may be integrated on a same chip with a plurality of application processors (for example, but not limited to a graphics processing unit and a multimedia processor). The chip may be referred to as a system on chip (system on chip). Whether components are independently disposed on different chips or are integrated and disposed on one or more chips usually depends on specific requirements of a product design. Specific implementation forms of the foregoing components are not limited in embodiments of the present invention.

This application further provides a computer-readable storage medium. The computer-readable storage medium stores a computer program. When the computer-readable storage medium is executed by a computer, a function of any one of the foregoing method embodiments is implemented.

This application further provides a computer program product. When the computer program product is executed by a computer, a function of any one of the foregoing method embodiments is implemented.

In embodiments of this application, for brief introduction and ease of understanding of embodiments, some easy names may be provided for some words and sentences (including nouns, technical terms, descriptions, interpretations, concepts, and the like). For example, "WLAN communication device" is briefly referred to as "WLAN device". For another example, "guaranteeing coexistence of a new device and a conventional device" is briefly referred to as "guaranteeing coexistence". The changes of the names are for the sake of brevity of description and does not imply limitations on the objects, concepts or meanings of these words and sentences.

In this specification, the claims, and the accompanying drawings of this application, the terms "first", "second", "third", and the like are intended to distinguish between different objects but do not limit a particular order.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The term "a plurality of" means two or more, and another quantifier is similar to this. The term "and/or" describes an association relationship between associated objects and indicates that three relationships may exist. For example, A and/or B may indicate the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Furthermore, "at least one of (at least one of)..." means one or any combination of subsequent associated objects. For example, "at least one of A, B, and C" includes A, B, C, AB, AC, BC, or ABC.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; or may be an optical medium, for example, a digital video disc (digital video disc, DVD); or may be a semiconductor medium, for example, a solid-state drive (solid-state drive, SSD).

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

In this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

## Claims

1. A communication method, comprising:
generating a physical layer protocol data unit PPDU, wherein the PPDU comprises a first field indicating that the PPDU is an extremely high throughput sounding null data packet EHT sounding NDP transmitted based on orthogonal frequency division multiple access OFDMA, wherein
the PPDU further comprises an extremely high throughput long training field EHT-LTF and a packet extension PE field, and the PE field is adjacent to the EHT-LTF; and
sending the PPDU.

2. The method according to claim 1, wherein the first field comprises a PPDU type and compression mode subfield.

3. The method according to claim 1, wherein the first field comprises a PPDU type and compression mode subfield and a second field, wherein
the PPDU type and compression mode subfield indicates that the PPDU is the EHT sounding NDP; and
the second field indicates that the PPDU is transmitted based on OFDMA.

4. The method according to claim 1, wherein the first field comprises a station identifier STA-ID subfield, and the STA ID subfield indicates that the PPDU is the EHT sounding NDP transmitted based on OFDMA.

5. The method according to any one of claims 1 to 4, wherein the PPDU further comprises an extremely high throughput signal EHT-SIG field, the EHT-SIG field comprises n user fields, the n user fields comprise at least one of a number of spatial streams subfield or a beamformed subfield, and n is a positive integer.

6. The method according to any one of claims 1 to 3, wherein the PPDU further comprises an EHT-SIG field, the EHT-SIG field comprises only a common field, and the common field comprises at least one of a number of spatial streams subfield or a beamformed subfield.

7. The method according to any one of claims 1 to 6, wherein the PPDU further comprises a universal signal U-SIG field and the EHT-SIG field, the U-SIG field comprises a first punctured channel indication field, and the EHT-SIG field comprises a second punctured channel indication field;
the first punctured channel indication field indicates a puncturing status in an 80 MHz subblock bandwidth of the U-SIG field; and
the second punctured channel indication field indicates a puncturing status in an entire bandwidth of the PPDU.

8. The method according to claim 7, wherein the second punctured channel indication field comprises at least one resource unit indication subfield, and the resource unit indication subfield indicates a puncturing status of a subchannel in the bandwidth of the PPDU.

9. The method according to claim 7, wherein the second punctured channel indication field comprises a bitmap subfield, and the bitmap subfield indicates the puncturing status in the entire bandwidth of the PPDU.

10. A communication method, comprising:
generating an extremely high throughput null data packet announcement EHT NDPA frame, wherein
the EHT NDPA frame comprises a third field indicating a puncturing status in an entire bandwidth of an EHT sounding NDP, and the EHT sounding NDP comprises a field indicating that the puncturing status in the entire bandwidth of the EHT sounding NDP is determined based on the third field; and
sending the EHT NDPA frame.

11. The method according to claim 10, wherein the third field comprises at least one piece of first information; and
the first information indicates a beamformee Bfee to feed back channel state information of a subchannel in the bandwidth of the EHT sounding NDP, or the first information indicates that a subchannel in the bandwidth of the EHT sounding NDP is not punctured.

12. The method according to claim 11, wherein the third field further comprises at least one piece of second information; and
the second information indicates that a subchannel in the bandwidth of the EHT sounding NDP is punctured.

13. A communication method, comprising:
receiving a PPDU, wherein the PPDU comprises a first field indicating that the PPDU is an EHT sounding NDP transmitted based on OFDMA, wherein
the PPDU further comprises an EHT-LTF and a PE field, and the PE field is adjacent to the EHT-LTF; and
performing channel estimation by using the PPDU.

14. The method according to claim 13, wherein the first field comprises a PPDU type and compression mode subfield.

15. The method according to claim 13, wherein the first field comprises a PPDU type and compression mode subfield and a second field, wherein
the PPDU type and compression mode subfield indicates that the PPDU is the EHT sounding NDP; and
the second field indicates that the PPDU is transmitted based on OFDMA.

16. The method according to claim 13, wherein the first field comprises a STA-ID subfield, and the STA-ID subfield indicates that the PPDU is the EHT sounding NDP transmitted based on OFDMA.

17. The method according to any one of claims 13 to 16, wherein the PPDU further comprises an EHT-SIG field, the EHT-SIG field comprises n user fields, the n user fields comprise at least one of a number of spatial streams subfield or a beamformed subfield, and n is a positive integer.

18. The method according to any one of claims 13 to 15, wherein the PPDU further comprises an EHT-SIG field, the EHT-SIG field comprises only a common field, and the common field comprises at least one of a number of spatial streams subfield or a beamformed subfield.

19. The method according to any one of claims 13 to 18, wherein the PPDU further comprises a U-SIG field and the EHT-SIG field, the U-SIG field comprises a first punctured channel indication field, and the EHT-SIG field comprises a second punctured channel indication field;
the first punctured channel indication field indicates a puncturing status in an 80 MHz subblock bandwidth of the U-SIG field; and
the second punctured channel indication field indicates a puncturing status in an entire bandwidth of the PPDU.

20. The method according to claim 19, wherein the second punctured channel indication field comprises at least one resource unit indication subfield, and the resource unit indication subfield indicates a puncturing status of a subchannel in the bandwidth of the PPDU.

21. The method according to claim 19, wherein the second punctured channel indication field comprises a bitmap subfield, and the bitmap subfield indicates the puncturing status in the entire bandwidth of the PPDU.

22. A communication method, comprising:
receiving an EHT NDPA frame, wherein
the EHT NDPA frame comprises a third field indicating a puncturing status in an entire bandwidth of an EHT sounding NDP, and the EHT sounding NDP comprises a field indicating that the puncturing status in the entire bandwidth of the EHT sounding NDP is determined based on the third field; and
parsing the EHT NDPA frame.

23. The method according to claim 22, wherein the third field comprises at least one piece of first information; and
the first information indicates a Bfee to feed back channel state information of a subchannel in the bandwidth of the EHT sounding NDP, or the first information indicates that a subchannel in the bandwidth of the EHT sounding NDP is not punctured.

24. The method according to claim 23, wherein the third field further comprises at least one piece of second information; and
the second information indicates that a subchannel in the bandwidth of the EHT sounding NDP is punctured.

25. A communication apparatus, comprising a processor and a transceiver, wherein when the processor executes computer programs or instructions in a memory, the method according to any one of claims 1 to 12 is performed, or the method according to any one of claims 13 to 24 is performed.

26. A computer-readable storage medium, wherein the computer-readable storage medium stores computer instructions; and the computer instructions instruct a communication apparatus to perform the method according to any one of claims 1 to 12, or the computer instructions instruct a communication apparatus to perform the method according to any one of claims 13 to 24.
